# EUROPÄISCHE PATENTSCHRIFT

(11) **EP 0 699 255 B1**
(45) Veröffentlichungstag und Bekanntmachung des Hinweises auf die Patenterteilung: **25.08.1999**
(21) Anmeldenummer: 95913133.5
(22) Anmeldetag: 16.03.1995
(51) Int. Cl.: E03B 3/03, E03B 1/04, E04H 6/02

(54) **BAUWERK IN FERTIGBAUWEISE AUS STAHLBETON ODER EINEM ERSATZSTOFF**
PREFABRICATED STUCTURE OF FERROCONCRETE OR A SUBSTITUTE MATERIAL
CONSTRUCTION PREFABRIQUEE EN BETON ARME OU DANS UN MATERIAU EQUIVALENT

(30) Priorität: 18.03.1994 DE 4409396
(43) Veröffentlichungstag der Anmeldung: 06.03.1996
(73) Patentinhaber: ZAPF GMBH + CO., D-95448 Bayreuth (DE)
(72) Erfinder: ZAPF, Werner, D-95448 Beyreuth (DE); HERRMANN, Thilo, D-30453 Hannover (DE)
(74) Vertreter: Dr. Elisabeth Jung Dr. Jürgen Schirdewahn Dipl.-Ing. Claus Gernhardt
(86) Internationale Anmeldenummer: EP9500976
(87) Internationale Veröffentlichungsnummer: WO9525852

(56) Entgegenhaltungen:
- EP-A- 0 209 833
- EP-A- 0 565 921
- DE-A- 3 927 042
- DE-U- 8 520 976
- DE-U- 9 213 382

## Beschreibung

Die Erfindung bezieht sich auf Anwendungen eines Bauwerks in Fertigbauweise aus Stahlbeton oder einem Ersatzstoff mit den Merkmalen der Oberbegriffe von Anspruch 1 oder Anspruch 6 und die entsprechenden Bauwerke gemäß Anspruch 3 und Anspruch 7. Derartige Bauwerke sind aus der EP-B1-0 209 833 bekannt. Einen ähnlichen Stand der Technik zeigt auch die DE-U1-85 20 976.7.

Beide vorbekannten Bauwerke sind als vorgefertigte transportable Raumzellen ausgebildet und dienen insbesondere als Garagen. Ihre Besonderheit besteht darin, daß die Bauwerke einen Zwischenboden aufweisen, der als Abdeckplatte für eine unterhalb der Garage angeordnete weitere Kammer des Bauwerks dient, in der also der Grund unterhalb der Garage für einen zusätzlichen Zweck nutzbar gemacht wird. Dieser zusätzliche Zweck besteht bei beiden vorgenannten bekannten Baukörpern darin, die Garage selbst in einem geschlossenen Kreislauf zur Energiegewinnung mittels eines Wärmespeichersystems nutzbar zu machen. Dabei ist speziell in der unteren Kammer ein Speicher für Wärmeträgerflüssigkeit eingebaut, gegebenenfalls auch innen an die Kammerwand anbetoniert, der mit einem Ein- und einem Auslaß versehen ist, welche in den geschlossenen Kreislauf der Wärmeträgerflüssigkeit einbezogen sind. Weitere Raumbereiche der unteren Kammer können mit zusätzlichen Einrichtungen der erwähnten Energiespeichereinrichtung versehen sein.

Der Erfindung liegt die Aufgabe zugrunde, den Nutzungsbereich eines Bauwerks mit den gattungsgemäßen Merkmalen zu erweitern. Diese Aufgabe wird durch die Anwendungen nach Anspruch 1 und Anspruch 6 und entsprechend bei einem Bauwerk gemäß Anspruch 3 oder Anspruch 7 gelöst.

Die Erfindung knüpft dabei daran an, daß es beispielsweise aus der EP-A2-0 565 921 bereits bekannt ist, Regenwasser, und zwar insbesondere solches, welches von Dachflächen von Gebäuden stammt, aufzubereiten, zwischenzuspeichern und einer erneuten Nutzung zuzuführen oder umweltfreundlich zu versickern.

Die Erfindung beruht dabei auf der Erkenntnis, daß bisher der Grund unterhalb von Garagen, sonstigen Raumzellen oder Parkplätzen noch nicht intensiv genug genützt worden ist. Dementsprechend geben die Ansprüche 1 und 3 eine Lösung für Parkplätze an, während die Ansprüche 6 und 7 sich auf eine Lösung für transportable Garagen oder sonstige vergleichbar große transportable Raumzellen bezieht, die außer als Einstellräume für Kraftfahrzeuge beispielsweise auch als Lagerschuppen, sonstige Nutzräume und gegebenenfalls Wohn- und Büroräume dienen können. Dabei ist nicht nur daran gedacht, diese Bauwerke einzeln zu errichten, sondern sie können auch in Reihenbauweise errichtet werden. Es soll auch nicht ausgeschlossen werden, auf derartigen Bauwerken im Sinne von Anspruch 6 oder 7 weitere Garagenzellen oder sonstige Raumzellen zu errichten, wobei dann das erfindungsgemäße Bauwerk als Fundament für diese zusätzliche Raumzelle oder eine Mehrzahl von denen dient.

Die nach der Erfindung vorgesehenen Wasserspeicher sind im Gegensatz zum Bauwerk nach der EP-A2-0 565 921 nicht in einen geschlossenen, sondern in einen offenen Kreislauf einbezogen. Dabei kann auf der Einlaßseite außer Regenwasser gegebenenfalls auch schon vorher genutztes Abwasser eingespeist werden, welches nach einer Weiterbehandlung nutzbar ist. Dabei braucht die Weiterbehandlung nicht nur die Möglichkeit einer erneuten Nutzung als Brauchwasser zu betreffen, sondern kann allein in einer umweltgerechten Entsorgung beispielsweise durch Versickerung bestehen.

Bei einer Nutzung als Brauchwasser wird in erster Linie an eine Nutzung zur Bewässerung von Gärten und sonstigen Freiflächen gedacht. Ebenso kommt die Nutzung für solche Verbraucher in Frage, die keine Trinkwasserqualität benötigen und für die bei moderner Bauweise oft schon eine eigene Wasserversorgung vorgesehen ist, wie beispielsweise zur Füllung von Waschmaschinen oder zur Toilettenspülung. Der Grenzfall einer Regenerierung des Wassers bis zur Trinkwasserqualität soll zwar nicht ausgeschlossen sein, wird jedoch im Normalfall im Hinblick auf den erforderlichen Aufwand weniger in Frage kommen.

Aus der DE-A 1 39 27 042 ist es an sich bekannt, bei an Ort errichteten Neubauten Fundamente, Wände, Decken usw. derart als Hohlkörper auszubilden, daß darin ein ein- oder doppelkammeriger Vorratsbehälter zur Speicherung vorgereinigten Regenwassers ausgebildet wird, das zur Entnahme insbesondere in niederschlagsarmen Zeiten bestimmt ist. Das Hohlkörpersystem soll dabei wasserdicht so ausgebildet sein, daß es den Gebäudeaufbau trägt.

Der Anwendungsanspruch 2 und die Bauwerksansprüche 3 bis 5 geben bevorzugte Möglichkeiten an, bei dem erfindungsgemäßen Bauwerk an der Oberseite der Abdeckplatte einen offenen Parkplatz auszubilden, wobei alternativ eine unmittelbare Nutzung der Abdeckplatte als Parkfläche oder eine Beschichtung der Abdeckplatte mit parkflächenbildenden Elementen in Frage kommt und dabei auch daran gedacht ist, noch eine Drainageschicht zwischen der Parkfläche und der Oberseite der Abdeckplatte auszubilden.

Die Erfindung schließt nicht aus, daß wie bisher bei bekannten Flüssigkeitsbehältern für Wärmeträgerflüssigkeit auch bei dem erfindungsgemäßen Wasserspeicher dieser zusätzlich in den eigentlichen Baukörper des Bauwerks eingebaut ist. Der verfügbare Raum wird jedoch vergrößert, wenn gemäß Anspruch 8 der Wandaufbau des Bauwerks selbst den tragenden Körper des Wasserspeichers bildet.

Auch der bauliche Aufwand kann dabei reduziert werden. Dies wird besonders deutlich, wenn gemäß Anspruch 9 der tragende Körper des Wasserspeichers aus wasserdichter Material der Bauwerkswandung besteht. Der Aufwand ist aber auch nur relativ klein, wenn gemäß Anspruch 10 der tragende Körper des Wasserspeichers aus wasserdurchlässigem Beton besteht, dieser aber mit einer wasserdichten Innenschicht versehen ist, die nicht selbsttragend zu sein braucht.

Eine Vollnutzung des Garagengrundes erhält man, wenn der Wasserspeicher die gesamte innere Grundfläche des Bauwerks einnimmt. Manchmal hat man aber auch Bedarf für eine geringfügige zusätzliche Nutzung der Grundfläche, sei es als Stand- und Arbeitsraum für Wartungspersonal, sei es als Aufnahmeraum für zusätzliche Einrichtungen zur Förderung und/oder Steuerung des offenen Wasserkreislaufes durch den Wasserspeicher. Hierbei wird man jedoch im allgemeinen höchstens 25 %, vornehmlich sogar höchstens 10 %, ja im Grenzfall sogar höchstens nur 5 % der Grundfläche benötigen.

Von besonderem Interesse ist, daß im Gegensatz zu den bekannten Bauwerken, von denen die Erfindung ausgeht, der unter der Abdeckplatte nutzbar gemachte Raum nicht dieselbe Grundfläche einzunehmen braucht wie eine oberhalb der Abdeckplatte errichtete Garage oder sonstige Raumzelle Es ist dabei durchaus denkbar, den unteren Raum größer als die Garage oder Raumzelle auszubilden, etwa um ein maximales Speichervolumen zu erreichen. Es hat sich jedoch gezeigt, daß die Grundfläche einer Garage so viel Kapazität hat, daß man sogar mit einer gegenüber einer Garagenzelle oder sonstigen Raumzelle geringeren Grundfläche des unteren Raums des Bauwerkes auskommen kann, was den erforderlichen Herstellungsaufwand wesentlich reduziert.

Bei nur teilweiser Überlappung der Garagen- oder Raumzelle mit dem unten liegenden Bereich kann man wenigstens den unten liegenden Bereich weiterhin als Fundament der Garagen- oder Raumzelle nutzbar machen.

Es hat sich gezeigt, daß das erfindungsgemäße Bauwerk dann, wenn es in seinem oberen Bereich als Garage oder sonstige Raumzelle nutzbar gemacht wird, zur Bildung des mindestens einen Wasserspeicher aufnehmenden unteren Bereichs kein größeres Format zu haben braucht als das einer konventionellen Doppelparkergarage in Fertigbauweise, bei der dann lediglich statt der üblichen schwenkbaren Einbauten die nach der Erfindung vorgesehene Abdeckplatte vorzusehen ist. Ein besonderer Vorteil dieser Bauweise besteht darin, daß dieselben Fertigungseinrichtungen und -verfahren wie bei der Herstellung der genannten Doppelparkergarage verwendet werden können.

Im Rahmen der Erfindung wird, wie gesagt, vor allem Niederschlagswasser und/oder geeignetes Abwasser verwendet, wobei aber auch in Sonderfällen Grundwasser oder gegebenenfalls Oberflächenwasser aus Flüssen oder Seen eingeleitet werden kann, wenn dies die örtlichen Verhältnisse ergeben. An eine Zwischenspeicherung von an sich reinem Trinkwasser ist nicht gedacht, jedoch im erwähnten Grenzfall an die Aufbereitung zu Trinkwasser und dessen Zwischenspeicherung, wie man es beispielsweise auch zur Füllung von Schwimmbecken benötigt.

Trotzdem kann der Wasserspeicher zusätzlich mit einer Frischwasserzuführung versehen sein, nämlich für Sonderfälle zur Auffüllung des gespeicherten Wassers über vorgegebene Minimalpegel in Trockenzeiten, wenn von anderen Quellen kein aufzubereitendes Wasser zur Verfügung steht.

Der mit dem Wasserspeicher versehene untere Bereich des Bauwerks sollte fernerhin für verschiedene Zwecke, wie Inspektion, Wartung oder Reparatur, begehbar sein, und zwar insbesondere aus dem oberen Bereich des Bauwerks selbst durch die Abdeckplatte hindurch. Dabei wird insbesondere im Fall der Verwendung des oberen Bereichs als Kraftfahrzeugabstellraum daran gedacht, den Durchlaß in der Abdeckplatte so abzudichten, daß der Wasserspeicher nicht mit Öl oder Benzin von der Kraftfahrzeugnutzung kontaminiert wird und umgekehrt der Wasserdampfdruck im Garagenraum nicht vom Wasserspeicher her über die klimatisch vorgegebenen Grenzen hinaus erhöht wird, was zu einer beschleunigten Durchrostung der Kraftfahrzeuge führen könnte.

Bei wechselndem Pegelstand im Wasserspeicher (12) kommt es zu kolbenartiger Schub- und Saugausübung auf die im unteren Bereich des Bauwerks befindliche Luft. Wenn diese nicht sonst mit der äußeren Atmosphäre kommunizieren kann, etwa bei hermetisch abgedichtetem Durchlaß (58) durch die Abdeckplatte, empfiehlt sich der Einbau einer Entlüftungseinrichtung, die bei sinkendem Pegel auch als Belüftungseinrichtung nutzbar gemacht werden kann. Zugleich gewinnt man dabei im unteren Bereich klimatische Vorteile.

Baulich kann man dabei die Entlüftungseinrichtung mit koaxialer Rohrausbildung mit einem Entwässerungsrohr (68) für Niederschlagswasser auf dem Dach einer Garagen- oder sonstigen Raumzelle kombinieren.

Im Normalfall ist daran gedacht, im unteren Bereich des Bauwerks jeweils nur einen einzigen Wasserspeicher auszubilden, der alternativ für Brauchwasserverwendung oder für Entsorgungszwecke genutzt werden soll. Die Brauchwassernutzung erfolgt dabei vornehmlich im privaten, die Entsorgung vornehmlich im kommunalen Bereich. Es sind jedoch auch Grenzfälle vorstellbar, in denen der untere, also der im Erdreich gelegene Bereich der Garage zur doppelten oder sonst mehrfachen Nutzung ausreicht. Dann ist zweckmäßig der Wasserspeicher, oder bei Verwendung mehrerer Wasserspeicher mindestens der untere Raum des Bauwerks, in mindestens zwei Abteilungen für unterschiedliche Nutzung unterteilt, wobei bei der unterschiedlichen Nutzung primär einmal an die Brauchwassernutzung und das andere Mal an die Entsorgung gedacht ist. Bei der Aufbereitung von Abwasser aus dem häuslichen Bereich ist insbesondere auch an die Aufbereitung von Grauwasser, d.h. nicht fäkal verunreinigtem Abwasser, als Brauchwasser gedacht. Man kann daher auch für die Brauchwassernutzung schon zwei Abteilungen vorsehen, je nachdem, ob etwa das genannte Grauwasser oder sonstiges Regen-, Oberflächen- oder gar Grundwasser genutzt wird. In einem solchen Fall kommt dann auch eine etwa dreikammerige Ausbildung des unteren Bereichs des Bauwerks in Frage. Weitere Nutzungsarten sind möglich, wobei diese sich dann vor allem in der Art der Aufbereitung vor der Zwischenspeicherung und/oder der erforderlichen Güte in der Nutzung oder Entsorgung unterscheiden.

Mittels je einer Füllstandsanzeige des jeweiligen Wasserspeichers und/oder der jeweiligen Filterkammer kann man mindestens eine Information in dem oberhalb des unteren Bereichs des Bauwerks gelegenen Bereich an Personen erreichen, etwa um diese zu manuellen Steuerungsmaßnahmen zu veranlassen. Derartige manuelle Steuerungsmöglichkeiten sind vielfach. Erwähnt seien nur Pegelstandsänderungen durch Frischwasserzuleitung oder Abpumpmaßnahmen, die nicht nur für den Zweck der sekundären Nutzung, sondern allein schon zur Pegelstandsveränderung vorgenommen werden können. Eine andere Maßnahme wäre das Veranlassen der Reinigung eines Filters. Eine manuelle Pegelstandsveränderung durch Abpumpen kann beispielsweise auch dann schon vorgenommen werden, wenn bei nahendem Winter die Frostgrenze im Boden sinkt und man verhindern will, daß gespeichertes Wasser gefriert.

Vorzugsweise wird jedoch eine Umschaltung zwischen Sommer- und Winterpegel automatisch vorgenommen. Wenn man dabei als Bodentemperatursensor ein hydromechanisches Element vorsieht, kommt man dabei ohne Fremdenergie aus. Anstelle eines hydromechanischen Elements kann auch jedes andere ohne Fremdenergie auskommende Sensorelement für Temperatur eingesetzt werden.

Um auch bei einer Fehlsteuerung des Wasserstandes oder außergewöhnlich hartem Winter Schäden am Bauwerk durch einfrierendes Wasser zu verhindern, kann die Speicherkammer im Querschnitt von oben nach unten verjüngt ausgebildet sein, um den Eisdruck auf die Bauwerks- oder Kammerwandung mit einer Kraftkomponente parallel zu den Wandflächen abzuleiten, um damit die Eisschicht zum Ausweichen nach oben zu zwingen.

Die Füllstandsanzeige kann man weiterhin nutzbar machen, um selbsttätig dafür zu sorgen, daß im Wasserspeicher im Regelfall ein bestimmtes minimales Sollvolumen nicht unterschritten wird und jedenfalls eine solche Entleerung des Wasserspeichers in Trockenzeiten vermieden wird, welche zu einer Beschädigung einer Pumpe für das Abpumpen des Wassers aus dem Wasserspeicher durch Trockenlaufen führen kann.

Eine Umschaltung zwischen einer maximalen Füllung des Wasserspeichers in Sommerzeiten und einer geringeren Füllung des Wasserspeichers in Winterzeiten, wenn der umgebende Boden gefroren ist, kann, wie schon erwähnt, auf seiten der normalen Wasserabpumpung zum Zwecke der Pegel absenkung oder auf seiten etwa der Trinkwasserzuführung zur Pegelanhebung erfolgen. Bevorzugt ist jedoch eine Steuerung durch eine Überlaufeinrichtung, wobei wahlweise ein dem Winterbetrieb zugeordneter niedrigerer zweiter Überlauf während des Sommerbetriebs durch Absperrung außer Betrieb gesetzt wird.

Die Absenkung des Pegels im Wasserspeicher für den Winterbetrieb ist dann nicht erforderlich, wenn man das erfindungsgemäße Bauwerk von vornherein mit seinem unteren Bereich so hoch ausbildet, daß der Wasserspeicher bzw. dessen maximaler Pegel in allen Jahreszeiten unterhalb der Frostgrenze (88) im Boden angeordnet werden kann. Dies erfordert jedoch einen in vielen Fällen, z.B. bei Ausbildung im Format einer Doppelparkergarage, unvertretbaren Bauaufwand. Darüber hinaus wird den praktischen Bedürfnissen im Rahmen des nur erforderlichen Bauaufwands Rechnung getragen. Denn zu Sommerzeiten kommt es häufig zu Platzregen, z.B. bei Gewittern, zwischen denen dann jedoch oft wieder größere zeitliche Pausen liegen, so daß schon deshalb ein größeres verfügbares Wasservolumen im Wasserspeicher erwünscht ist. Hinzu kommt, daß gerade zu Sommerzeiten in Dürreperioden ein besonderer Bedarf von Brauchwasser für die Bodenbewässerung besteht. Dieser Bedarf ist in Winterszeiten viel weniger gegeben. Außerdem ist im Winter die Häufigkeit von Regenwasserniederschlägen geringerer Ergiebigkeit groß.

Die Ansprüche 33 bis 39 befassen sich mit bevorzugten Merkmalen für den besonderen Anwendungsfall der Nutzung des Wasserspeichers als Zwischenspeicher (268) für Entsorgungszwecke. Zwar könnte man zu entsorgendes Wasser direkt in die Kanalisation einleiten. Eine solche Kanalisation ist jedoch vielerorts nicht vorhanden. Wegen der vielerorts bereits vorhandenen Überlastung von Entsorgungskanälen für Abwasser besteht fernerhin zunehmend die Tendenz, die Entsorgung jedenfalls von Niederschlagswasser lokal zu lösen, auch um die Grundwasserneubildung zu fördern. Im übrigen kann man bei einer derartigen lokalen Lösung auch vermeiden, daß das zu klärende Abwasser, wie bisher bei Mischsystemen üblich, verdünnt wird oder Vorfluter unnötig belastet werden.

Die Erfindung sieht daher verschiedene Maßnahmen im Bereich der Vorfertigung und im Bereich der Errichtung des Bauwerks vor, um Abwasser, welches in einem Wasserbehälter im Bauwerk gemäß der Erfindung zwischengespeichert ist, direkt im Bodenbereich außerhalb des Bauwerks nach der Reinigung, die innerhalb des Bauwerks durch zusätzliche Einrichtungen vorgenommen wird, versickern zu lassen. Soweit es sich um Abwasser handelt, welches keiner Vorreinigung bedarf, kann der bei dem erfindungsgemäßen Bauwerk vorhandene Wasserspeicher mindestens zur Zwischenspeicherung für den Zweck dosierter Abgabe dienen. Die Erfindung trägt dabei der Tatsache Rechnung, daß auch bei vollem Brauchwasserspeicher, etwa aufgrund fehlenden Verbrauchs in der Urlaubszeit, ein zusätzliches Puffervolumen oberhalb des durch die Überläufe bedingten maximalen Füllstandes des Brauchwassers zur Verfügung steht.

Die Erfindung schließt dabei auch Maßnahmen ein, um bei ansteigendem Grund- oder Stauwasserpegel Gegenmaßnahmen gegen ein Aufschwimmen des Bauwerks auf dem unter ihm aufsteigenden Wasser zu treffen. Auch wird zweckmäßig dafür gesorgt, daß das zu versickernde Wasser rings um den Boden des im Erdreich zu errichtenden Bauwerks verteilt wird (Ansprüche 33 bis 38).

Im Rahmen der Problematik der direkten Versickerung oder der Nutzung nach Aufbereitung von Abwasser stellt sich auch das Problem, daß in bestimmten Gegenden der Anfall an Wasser, welches versickert werden soll, z. B. herrührend aus Niederschlägen, örtlich sehr unterschiedlich ist. Auch im Falle von Niederschlagswasser von Verkehrs- oder Dachflächen stellt sich die Problematik der lokal ungleichmäßigen Verteilung des Ablaufwassers, z. B. aufgrund ungleichmäßigen Gefälles oder unterschiedlicher Erstreckung der Einzugsflächen. Hierzu wird im Rahmen der Erfindung auch eine Anwendung gemäß Anspruch 78 von verschiedenen Bauwerken gleicher Bauart gemäß der Erfindung vorgesehen, mit dem Ziel, benachbarte Bauwerke, in denen die Wasserspeicher oder Wasserzwischenspeicher noch nicht bis zu ihrem maximalen Pegel gefüllt sind, als ergänzendes Speichervolumen zu solchen Bauwerken nutzbar zu machen, deren Wasserspeicher bereits bis zum obersten zulässigen Pegel gefüllt ist. Dabei ist auch daran gedacht, restliches Überschußwasser abzuleiten, und sei es auch nur in ein kommunales System, und bedarfsweise einzelne Verbindungsleitungen zwischen paarweise benachbarten Bauwerken isolieren, absperren einzeln inspizieren und gegebenenfalls warten oder reparieren zu können.

Zur Wasserentnahme aus dem Wasserspeicher ist es zweckmäßig, Gegenmaßnahmen dagegen zu treffen, daß beispielsweise durch starke Wassereinleitung bei Platzregen im Wasserspeicher eine solche Unruhe entsteht, daß im Wasserspeicher abgesetzte Schmutzteile aufgewirbelt und so im Übermaß in den Strom des abgenommenen Wassers gelangen. Eine wirksame Maßnahme zur Reinigung des Wassers durch Sedimentation stellt auch die Trennung von bereits gespeicherter Wasser und neu hinzufließendem dar. Die Erfindung sieht hierzu gemäß Anspruch 44 eine Einschichtung des einlaufenden Wassers in den oberen Speicherbereich vor, durch Einleitung mit Strömungsrichtung nach oben, beispielsweise über einen Rohrkrümmer. Dies führt im Sommer aufgrund der Temperatur- und Dichteverhältnisse im Wasserkörper zu einer stabilen Schichtung im Speicher. Eine weitere Entkopplung der Wasserentnahme vom Zustand im Wasserspeicher sieht Anspruch 40 vor, wobei die Ansprüche 41 oder 42 und 43 Gegenmaßnahmen gegen einen Eintritt von Schwimmstoffen in das abgenommene Wasservolumen treffen. Dabei ist die Ausbildungsform nach Anspruch 41 dann zweckmäßig, wenn das die Wasserentnahme vom gespeicherten Wasservolumen separierende Kammergehäuse hinreichend große Wanddicke hat, während die Verwendung von Rohrkrümmern insbesondere dann in Frage kommt, wenn das Kammergehäuse dünn ausgebildet ist. Beiden Einlaßausbildungen ist gemeinsam, daß der Eintritt des zu entnehmenden Wassers in das Kammergehäuse niedriger liegt als der Austritt aus der Wand des Kammergehäuses in dessen Innenraum, und daß vorzugsweise die Einströmrichtung in das Kammergehäuse nach oben gerichtet ist. Der Wassereintritt über einen derartigen Kanal erfolgt erst dann, wenn dessen außen liegende Öffnung unterhalb der von Schwimmstoffen gebildeten Haut auf dem Wasservolumen liegt.

Auch der Wassereintritt in den Wasserspeicher eines erfindungsgemäßen Bauwerks wird zweckmäßig von dem übrigen Speichervolumen des Wasserspeichers separiert, wozu die Ansprüche 44 bis 66 bevorzugte Maßnahmen angeben. Zweckmäßig wird dabei in dem separierten Bereich mindestens eine Separation von Sinkstoffen, sogenanntem Schlamm, vorgenommen, wobei außer solchem Schlamm, der üblicherweise dem Wortbegriff subsumiert wird, auch mit zugeführte sonstige Feststoffe in Frage kommen bis hin zu Ziegelsplittstückchen u.dgl. Die Abscheidung wird gefördert, wenn eine zyklonartige Strömung innerhalb der Einlaßkammer erzeugt wird, sei es durch tangentiale Einleitung, sei es durch zusätzliche Führungsmaßnahmen in der Kammer, wobei vorzugsweise bei tangentialer Einleitung zusätzlich an eine nach unten gerichtete Zirkulation längs der Innenwandfläche der Kammer gedacht ist. Diese Zirkulation sollte durch entsprechende Leitflächenausbildung und -anordnung zweckmäßig so geführt werden, daß sie oberhalb der eigentlichen Schlammfangzone bereits zur Ruhe gekommen ist und nicht Schlamm zusätzlich aufwirbelt. Zur Schlammentnahme kommen verschiedene Möglichkeiten in Betracht, beispielsweise ein entnehmbarer Schlammeimer, oder eine Bodenspüleinrichtung, die den Schlamm z. B. mittels einer Wasserstrahlpumpe aus einer Vertiefung im Kammerboden abzieht.

Die Einlaßkammer kann weiterhin dazu dienen, das dem Wasserspeicher zulaufende Wasser aufzubereiten. Für einfache Fälle reicht dabei eine einfache Siebung. Für kompliziertere Fälle muß man Filtertechnik einsetzen, wobei alle in Frage kommenden bekannten Techniken im Prinzip einsetzbar sind bis hin zur Verwendung von bakteriziden Oberflächen. Eine praktische Grenze ist durch die verfügbaren Filterdrücke gegeben.

Ebenso sind bekannte Regenerationstechniken von Filtern einsetzbar, wobei insbesondere an Rückspülung oder gar Selbstreinigung durch aus dem Wasserspeicher entnommenes Wasser gedacht ist.

Wie schon erwähnt, sind bei Umschaltung des Niveaus im Wasserspeicher zwischen Sommer- und Winterbetrieb zweckmäßig mindestens zwei Überläufe, nämlich der erste und der zweite, vorgesehen. Im Rahmen der Erfindung wird dann vorzugsweise noch ein dritter Überlauf (Anspruch 65) angeordnet, wenn eine Filtration über ein Siebrohr oder einen Filter vorgesehen ist, welche einen in einer Wassersäule meßbaren Strömungswiderstand darstellt. Ein in der Einlaßkammer vorhandener Filter, vorzugsweise ein Ringfilter, wird dabei, im Falle eines Ringfilters, vorzugsweise von radial außen nach radial innen, durchströmt, so daß die in Strömungsrichtung vor dem Filter gelegene Wassersäule, d.h. die Wassersäule in der Einlaßkammer um den Filterwiderstand, als Flüssigkeitssäule gemessen, höher steht als die Wassersäule im Bereich des eigentlichen Speichervolumens in Strömungsrichtung hinter der Einlaßkammer bzw. hinter dem Filter, aus dem, im Falle eines Ringfilters, vorzugsweise aus dessen Kernbereich, das Wasser in das eigentliche Speichervolumen überführt wird. Der in der Einlaßkammer angeordnete dritte Überlauf ist daher um das dem Filterwiderstand entsprechende Maß höher angeordnet als der im Bereich des eigentlichen Speichervolumens hinter der Einlaßkammer angeordnete erste Überlauf. Die Anordnung des ersten Überlaufs gemeinsam mit dem dritten Überlauf sorgt dafür, daß bei übermäßigem Anfall von Wasser im Einlaßbereich des Bauwerks Überschußwasser zusammen mit im Speicher befindlichen Schwimmstoffen gleichmäßig aus der Einlaßkammer und aus dem eigentlichen Speichervolumen des Wasserspeichers entfernt wird.

Die Ansprüche 69 bis 77 betreffen eine zusätzliche Nutzung der Außenflächen des Bauwerks, gegebenenfalls auch der im Erdreich liegenden, als Träger für mindestens einen weiteren beispielsweise als bepflanzter Bodenkörper ausgebildeten Filter oder Speicher. Zur Verbesserung des Klimas ist dabei an eine strahlungsdurchlässige, vorzugsweise belüftbare Umhüllung des Filters gedacht. Die Bewässerung erfolgt dabei vorzugsweise durch kapillaren Aufstieg in einer der Zuleitungen, unter Ausnutzung der Verdunstung aus dem Filter und der Transpiration der Pflanzen.

Die Erfindung wird im folgenden anhand schematischer Zeichnungen an mehreren Ausführungsbeispielen noch näher erläutert.

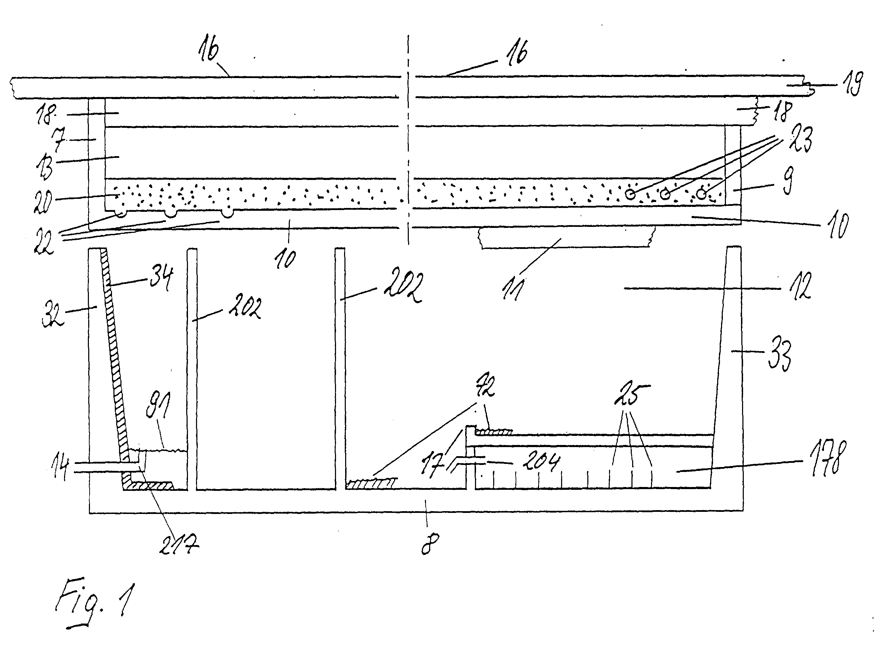

Fig. 1 zeigt ein Beispiel für die Ausführung des Bauwerks als Stellfläche 16 für Kraftfahrzeuge mit darunterliegendem Speicher 12. Der Speicher 12 ist mit den seitliche Begrenzungen 32/33 monolithisch mit dem Boden 8 gefertigt und weist die Wasserentnahme von gespeicherten Wasservolumen separierende Kammerwandungen 202 auf. Die Abdeckplatte 10 trägt in diesem Ausführungsbeispiel seitliche Begrenzungswände 7/9, die entweder monolithisch mit der Abdeckplatte 10 gefertigt sind 7, oder vorgefertigt daran befestigt sind 9. Unten trägt die Abdeckplatte 10 eine nur teilweise gezeichnete Isolierschicht 11. Die auf der Platte liegende Schicht 20 ist wasserdurchlässig ausgebildet und wirkt zusammen mit einem Kanalsystem 22/23, das entweder offen 22 oder geschlossen 23 ausgebildet ist. Die tragende Speicherwandung 32/33 ist dabei wasserdurchlässig ausgebildet 32 und mit einer wasserdichten Schicht versehen 34, oder selbst wasserundurchlässig 33. Eine Zwischenschicht 13 liegt dabei unterhalb einer Belagschicht 18, die wiederum von der die Verkehrsfläche bildenden Schicht 19 überdeckt ist. Diese Schicht ist hier in eine Verkehrsfläche fugenlos eingebunden. Die Figur zeigt weiterhin eine Wasserentnahmekammer 178, die hier flach und in weiter horizontaler Erstreckung über dem Boden 8 ausgebildet ist. Die obere Kammerwandung ist durch einen Rand 17 begrenzt, um das Sediment 72 festzuhalten. In dem Kammerboden sind Erhebungen 25 angebracht, zur Verbesserung der Sinkstoffabscheidung. Der Einströmkanal 204 ist als Schwimmstoffbarriere ausgebildet. Die Kammer 178 ist für Reinigungszwecke durch einen nicht gezeichneten Deckel öffenbar verschlossen. Der Einlauf 14 in den Speicher mündet in den Krümmer 217, wobei die Krümmeröffnung nach oben zeigt und etwa auf der Höhe des Minimalwasserstandes 91 im Speicher oder etwas darunter liegt.

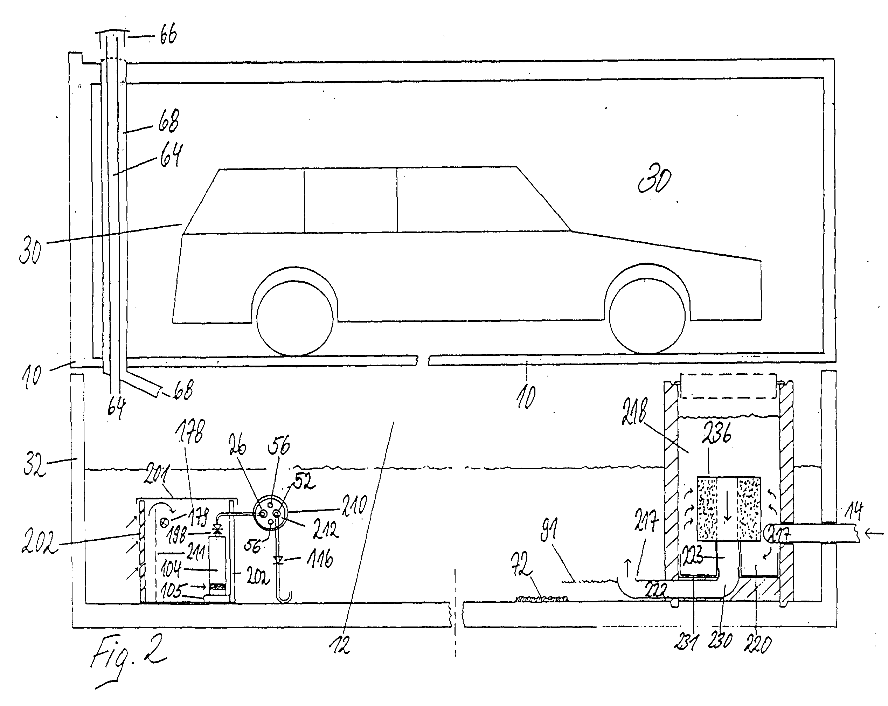

Fig. 2 zeigt eine alternative typische Ausführung, aus den Bauelementen hergestellt, wie sie sonst zur Herstellung einer Doppelparkergarage Verwendung finden. Dabei ist die Abdeckplatte 10 der Garage in Vorfertigung mit dem Oberbau der Garage 30 verbunden. Der Speicher 12 zeigt eine typische Ausstattung für die Brauchwassernutzung. In der Einlaufkammer 218 ist ein koaxialer Ringfilter 236 integriert, mit radialer Durchströmung von außen nach innen. Der Zulauf erfolgt über den Krümmer 217, der tangential zum zylindrischen Filter 236 ausgerichtet ist. Der Krümmer 217 ist steckbar in einer nicht gezeichneten Muffe in der Kammerwandung befestigt. Der Ringfilter 236 ist steckbar in einer Muffe des Standrohres 223 befestigt und wird von diesem getragen. Das Standrohr 223 ist steckbar im Krümmer 230 des Wasserauslasses 222 geführt, der in den Einlaufkrümmer 217 mündet, vorzugsweise auf oder unterhalb der Höhe des Minimalwasserstandes 91, um Verwirbelungen des andeutungsweise gezeichneten Sediments 72 zu vermeiden. Auf dem Kammerboden 231 ist ein konzentrischer Schlammeimer 220 angeordnet, der mit einer nicht gezeichneten Zugverbindung nach oben aus der Kammer 218 herausgenommen werden kann. Die Be- und Entlüftung erfolgt bei dieser einfachen Ausführung über eine gemeinsame Leitung 64, die oben mit einem Hut 66 gegen das Eindringen von Fremdkörpern gesichert ist. Die Leitung ist konzentrisch im Dachentwässerungsrohr 68 geführt. Die Fig. 2 zeigt weiterhin eine Entnahmekammer 178, in der eine Tauchpumpe 104 mit nachfolgendem Rückflußverhinderer 198 montiert ist. Die Abdeckung 201 der Kammer 178 ist abnehmbar. Die Einströmung erfolgt über von außen unten nach innen oben gerichteten Kanälen 202. Eine teilweise perforierte Prallwand 211 leitet den Einlaufstrom nach oben in die Kammer 178, besonders bei Füllständen im Speicher, die oberhalb der Kammerabdekkung 201 liegen. Ein die Pumpe 104 umgebender Kragen 105 verhindert ein Eindringen von am Boden 8 abgelagertem Sediment 72 in die Ansaugöffnungen der Pumpe 164 oder eines ersatzweisen nicht gezeichneten Fußventils, ohne daß diese deshalb oberhalb des Bodens 8 angebracht werden müssen. Ein nicht gezeichneter weiterer Kragen um die Pumpe 104 umhüllt diese bei niedrigen Wasserständen dauerhaft an der Außenfläche mit Wasser, so daß die Kühlung der Pumpe 104 auch bei niedrigen Wasserständen gewährleistet ist.

Die Frischwasserzuleitung 52, die Brauchwasserableitung 26, und die Elektroleitungen 56 sind durch ein gemeinsames Einsteckteil geführt, das steckbar und mit einem Dichtring 212 in die Muffe 210 eingesetzt ist, die in Vorfertigung bei der Herstellung der Bauwerkswandung 32 in diese eingesetzt ist. In der Frischwasserzuleitung 52 ist eine Rücklaufsperre 116 eingebaut gegen Rückstau aus dem Speicher 12 in die Zufuhrleitung 14 hinein. Die Trinkwassernachspeisung in diese Leitung erfogt über einen nicht gezeichneten sogenannten freien Einlauf, der sich auch außerhalb des Bauwerks befinden kann. Der Trinkwasseranschluß 52 ist auf den Kammerboden 8 heruntergeführt mit Einströmrichtung nach oben, kann jedoch genauso in einer nicht gezeichneten Variante in die Einlaufleitung 14 münden, oder in einer anderen Variante den Filter 236 von oben über eine nicht gezeichnete Düseneinrichtung bewässern. Als Düseneinrichtung kann insbesondere ein sogenannter Perlator aus der Haustechnik Verwendung finden.

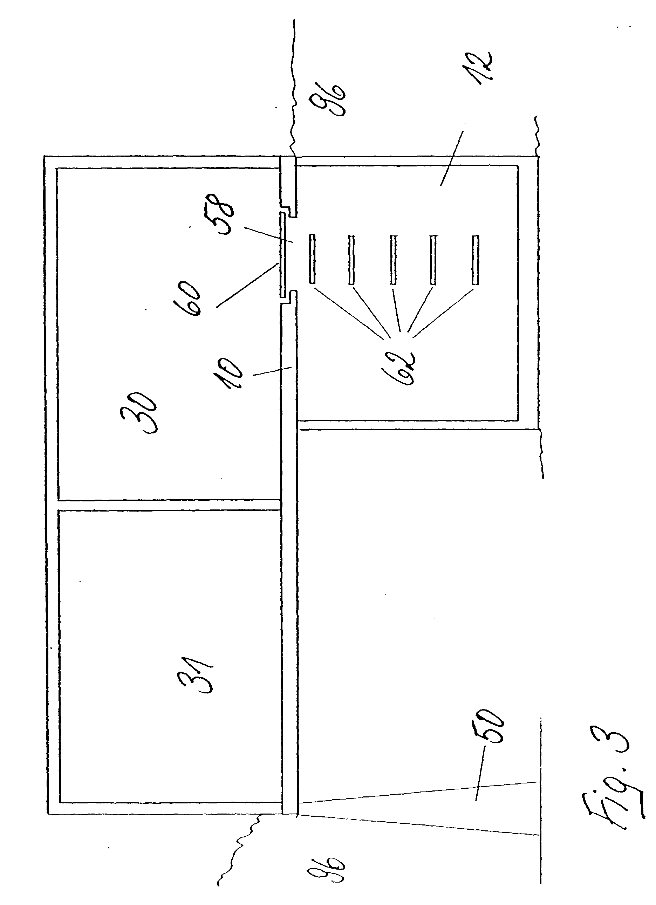

Fig. 3 zeigt ein Beispiel, bei dem der unterhalb der Ebene der Abdeckplatte 10 gelegene Bereich des Bauwerks eine von der Garagen- oder Raumzelle verschiedene horizontale Erstreckung hat, nämlich eine geringere. Der im Erdboden 96 liegende Speicherbereich 12 erstreckt sich nicht über die gesamte Grundfläche der oberhalb liegenden Garage 30 oder Raumzelle 31. Gezeigt ist ein mit der Abdeckung 60 verschließbarer Durchgang 58, unterhalb dessen eine Steighilfe 62 angebracht ist. Das Fundament 50 kann als vorgefertigtes Bauteil für die Aufnahme des oberen Bauwerkteils 30/31 vorbereitet sein.

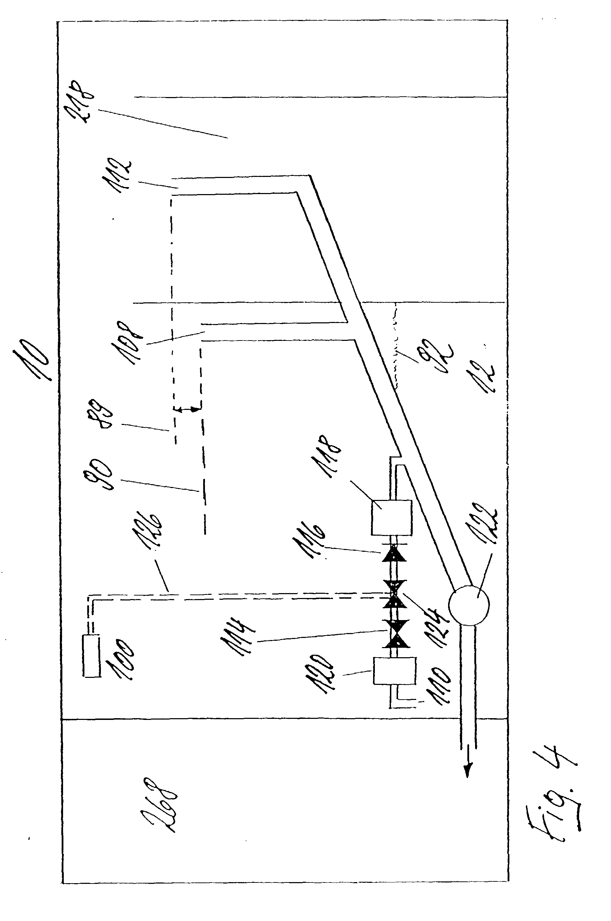

Fig. 4 zeigt eine bevorzugte Ausführung des Speicher-Überlaufsystems innerhalb des unter der Abdeckplatte 10 gelegenen Speicherraums 12. Die Einlaufkammer 218 enthält den Überlauf 112, der etwa um die Höhe des Widerstands des nicht gezeichneten Filters in der Filterkammer, gemessen als Höhe einer Flüssigkeitssäule, höher liegt als der Speicherüberlauf 108. Beide münden in eine gemeinsame Ableitung, die über einen Geruchsverschluß 122 mit intergriertem Gitter, vor allem gegen Ratten, in ein benachbartes Abteil 268 geführt sind, oder in eine kommunale Entsorgungsleitung münden. Die Höhe des Überlaufs 108 bestimmt den maximalen Sommer-Sollpegel (90), die Höhe des Überlaufs 112 bestimmt den maximalen Filterüberstau 89 in der Einlaufkammer. Der Überlauf 110 regelt die automatische Winterabsenkung auf den maximalen Winter-Sollpegel 92 durch hydromechanische Betätigung eines Thermostatventils 124 über einen Fernfühler 100, der über eine Kapillarleitung 126 mit dem Ventil verbunden ist. In Fließrichtung vor dem Thermostatventil 124 ist ein weiteres Absperrventil 114 angeordnet und danach eine Rücklaufsperre 116. Schmutzfänger 120 und 118 der Ventilbaugruppe sichern die Einrichtung gegen Versagen durch regelwidrig eindringende Störstoffe. Die Eintrittsöffnung des Überlaufs 110 ist als Tauchrohr ausgebildet, als Barriere gegen Schwimmstoffe. Die Dimensionierung des Querschnitts der Sommer-Überläufe 108 und 112 und der weiteren Ableitung erfolgt bei einzuleitendem Niederschlagswasser nach einem Bemessungsregen, während der Winter-Überlauf 110 mit wesentlich geringerem Querschnitt ausgebildet ist. Als Armaturen werden deshalb vorzugsweise bekannte Formteile und Ventile aus der Trinkwassertechnik eingesetzt.

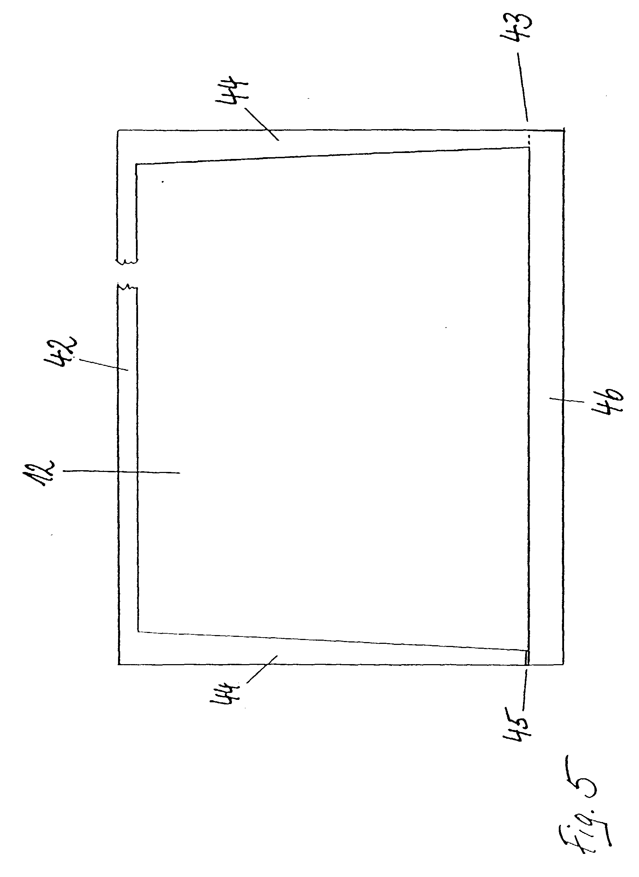

Fig. 5 zeigt bauliche Besonderheiten des Bauwerks. Die obere Begrenzung 42 des Speichers 12 ist monolithisch mit den Seitenwänden 44 gefertigt, das Bodenteil 46 vorgefertigt mit dem Seitenteil 44 vereint, ohne oder mit einer unlösbaren Fuge 43. Eine Variante stellt die lose Aufstellung des Seitenteils 44 auf das Bodenteil 46 mit Fuge 45 dar.

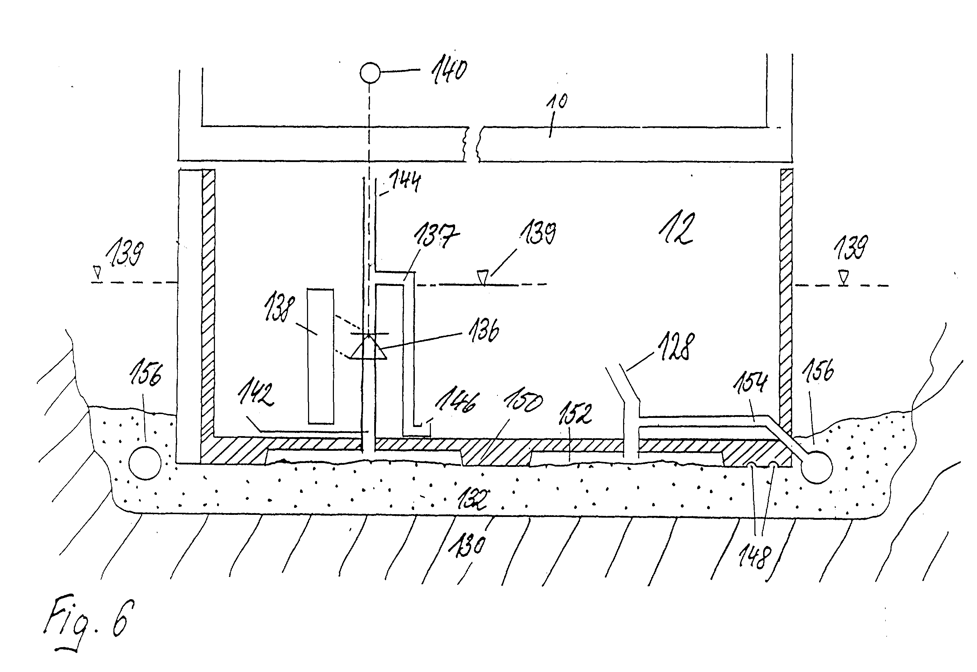

Fig. 6 zeigt die eine Ausführung des Bauwerks mit einer integrierten Auftriebsicherung. Das Speicherinnere 12 kommuniziert über eine Leitung 142 über eine Rücklaufsperre 136 und eine weitere Leitung und die Austrittsöffnung 146 mit dem mit der Außenseite des Bodenteils. Das Bodenteil besitzt Stege 150 und dazwischenliegende Aussparungen 152 zur besseren Wasserverteilung unterhalb der Grundfläche. Die Aussparungen 152 können auch die Form von Kanälen 148 annehmen. Das Bauwerk ist ringförmig von einer Sickerleitung 156 umgeben, die in einer varianten Bauweise auch unterhalb des Bodens liegen kann. Die Rücklaufsperre 136 wird in ihrer Schließbewegung von einer wasserstandsabhängigen Zusatzkraft unterstützt, die in diesem Beispiel von der Auftriebskraft eines Schwimmers 138 erzeugt wird. Eine Schleife 137 der Leitung 142 bestimmt den äußeren Mindestwasserstand 139 im Grund, der notwendig ist, um ein Einleiten des außen drückenden Wassers in den Speicher 12 zu erzielen. Unterhalb dieses kritischen Wasserstandes 139 soll die Gewichtskraft des Bauwerks den hydrostatischen Auftrieb des Bauwerks übersteigen. Die Leitung 142 besitzt eine Belüftung 144, um eine Saugwirkung durch die Rohrschleife 137 zu verhindern und um einen ungewollten Effekt durch eingeschlossene Luft auszuschließen. Zur Funktionskontrolle der Rücklaufsperre 136 besitzt diese eine von oberhalb der Abdeckplatte 10 zu betätigende Fernbedieneinrichtung 140, die vorzugsweise mit dem Entlüftungskanal 144 kombiniert ist. Der Kanal 144 ist dabei so ausgebildet, daß die Rücklaufsperre 136 von oben mit Hilfe einer nicht gezeichneten Vorrichtung zur Wartung demontiert werden kann, ohne den Speicher 12 entleeren zu müssen. Überschußwasser kann über eine Leitung 128/154 entweder in den wasserleitfähigen Unterbau 132 oder in die Ringsickerleitung 156 eingeleitet werden. Das Bauwerk ist hierzu auf wasserleitfähigem Grund 130 gegündet.

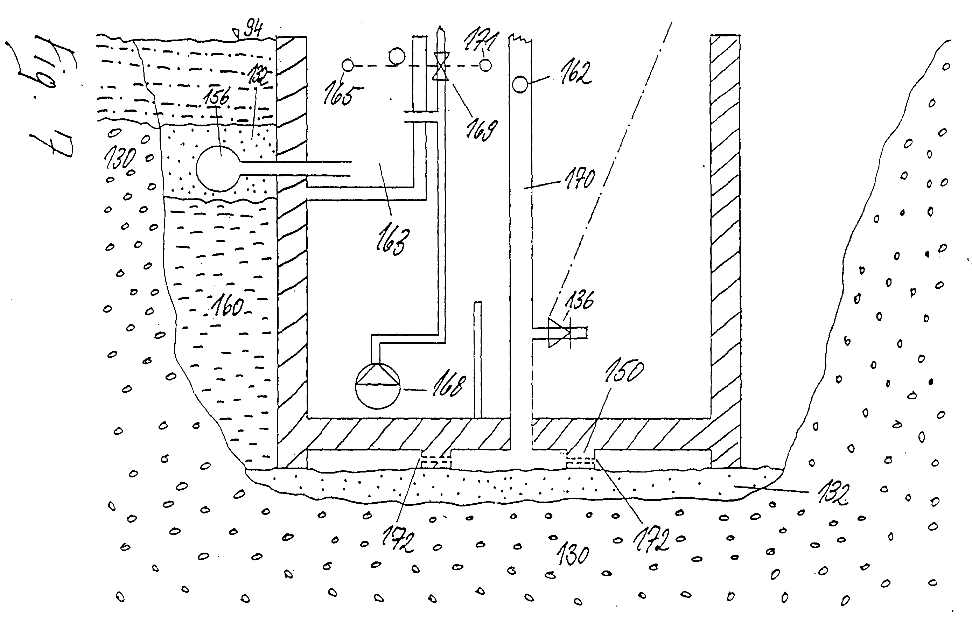

Fig. 7 zeigt eine Bauweise, die bei speziellen Untergrundverhältnissen angewendet wird. Dies kann beispielsweise ein nahe an die Bauwerkssohle heranreichender, hoher maximaler Grundwasserstand sein, oder ein Untergrund 130 mit ungünstigen Filtereigenschaften. Die Versickerung von Überschußwasser erfolgt in diesem Fall über eine nahe der Geländeoberkante 94 verlegte Ringsickerleitung 156, die in einer wasserleitfähigen Schicht 132 liegt. Zwischen dem anstehenden Untergrund 130 und dieser Schicht 132 ist ein Schüttgut 160 mit günstigen Filtereigenschaften eingebracht. Die Stege 150 an der Bodenunterseite weisen zur besseren isotropen Wasserverteilung Kanäle 172 auf. Die Auftriebsicherung über eine Rücklaufsperre 136 ist in diesem Fall modifiziert aufgebaut. Die Auftriebsperre ist an einen Pegelkanal 170 angeschlossen, der eine Füllstandmeß- und Schalteinrichtung 162 besitzt und über den eine Probenahme zu Analysezwecken aus dem Untergrund möglich ist. Der Auslaß von Überschußwasser aus dem Speicher erfolgt über eine Pumpe 168, die wahlweise eine Auslaßkammer 163 befüllt oder im Falle einer ungenügenden Sickergeschwindigkeit und eines vollen Speichers 12 das Überschußwasser über eine weitere mit einem Ventil 169 versehene Leitung nach außen ableitet, wobei das Ventil 169 im Regelfall geschlossen ist und nur bei gleichzeitigem Überschreiten eines maximalen Füllstandes in Speicher 12 und Kammer von zwei Füllstandsmeßvorrichtungen 171/165 gesteuert öffnet.

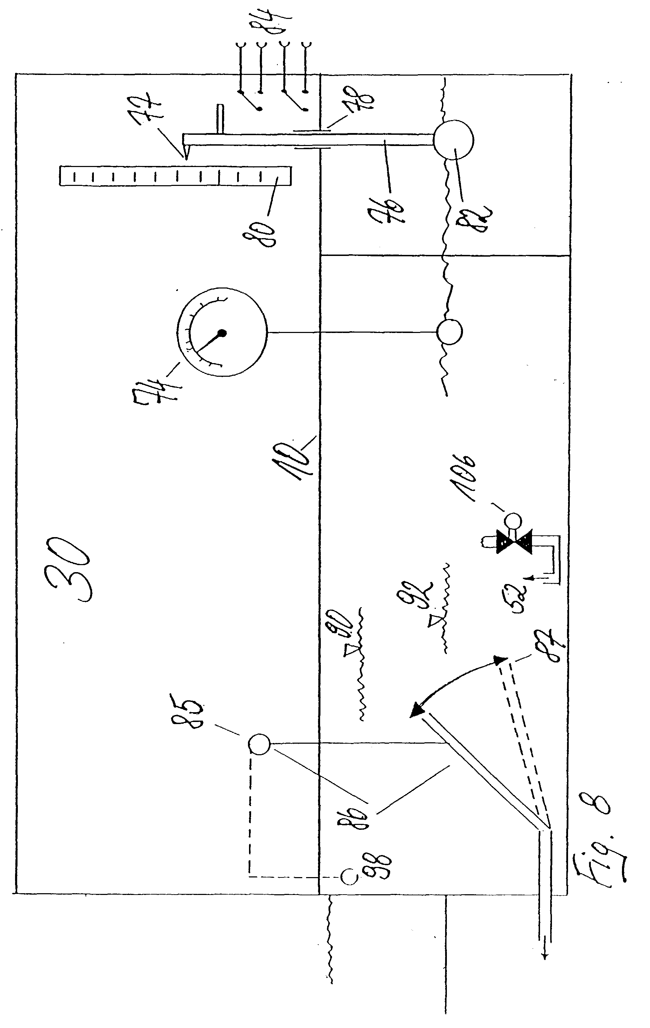

Fig. 8 zeigt eine bevorzugte Anordnung zur Füllstandssteuerung im Bauwerk mit einer Füllstandsanzeige 74. Eine Stange 76 mit einem daran befestigten Schwimmer 82 ist durch eine Hülse 78 durch die Abdeckplatte 10 nach oben in die Garage 30 oder Raumzelle 31 u.U. auch ins Freie geführt. Die Stange trägt einen Zeiger 77, der an einer Skala 80 den Wasserstand im Abteil des Schwimmers 82 anzeigt. Der Stab 76 betätigt dabei direkt mechanisch oder berührungslos beispielsweise durch Magnetfelder elektrische Schalter 84 oder auch nicht gezeichnete Ventile. Weiterhin ist eine Variante der Überlaufsteuerung 86 gezeichnet, die hier variabel über eine in der Höhe bewegliche Überlauföffnung 87 von oben über eine Vorrichtung 85 betätigt eine stufenlose Absenkung des Wasserstandes 90/92 im Winter ermöglicht. Dabei kann die Vorrichtung 85 auch automatisch von einem Temperaturfühler 98 angesteuert oder angetrieben werden. Die Frischwasserzufuhr 52 ist in diesem Anwendungsbeispiel über ein Schwimmerventil 106 gesteuert.

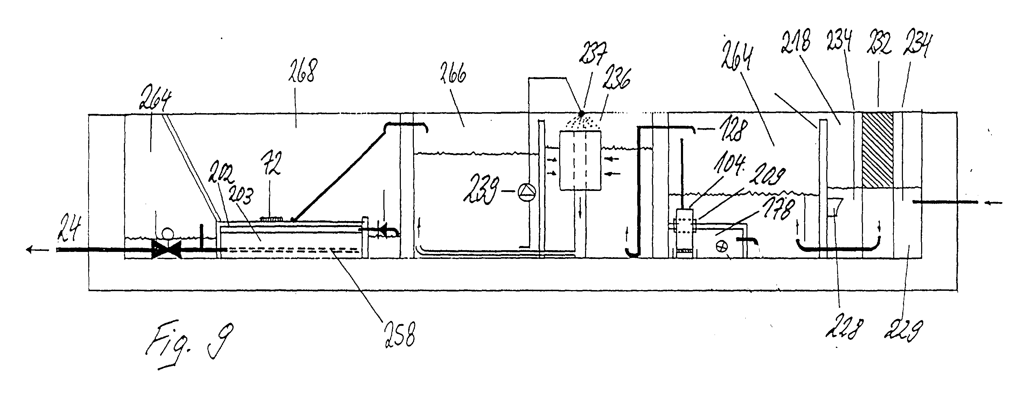

Fig. 9 zeigt eine dreiteilige Ausführung des Speicherbauwerks für Brauchwassernutzung 264, für Grauwassernutzung 266 und für Entsorgung des Überschußwassers 268. In der Einlaßkammer 218 ist ein zylindrischer Siebfilter 232 mit einer konzentrischen Tauchwand 234 angebracht Außerdem weist sie eine Schlammfangzone 229 auf. An den Kammerwänden sind Leiteinrichtungen 228 vorgesehen, die eine bessere Abscheidung von Sinkstoffen vor dem Filter 232 bewirken. Die Entnahmepumpe 104 ist steckbar in einer Muffe 209 in der Entnahmekammerwandung eingeführt. Die Kammer 178 ist flach in länglicher Erstreckung ausgebildet, um ein möglichst großes Wasservolumen in der Kammer 178 auch bei niedrigen Wasserständen im Speicher 12 vorzuhalten. Durch die längere Verweilzeit und die Trennung von neu einlaufendem Wasser im Speicher 12 ist die Abscheidung auch von Feinststoffen möglich, so daß in der Druckleitung nach der Pumpe 104 keine weitere Filtration erforderlich ist. Bei erhöhten hygienischen Anforderungen an das Brauchwasser ist an eine Bestrahlung der Kammer mit einer Strahlungsquelle, beispielsweise eine Quecksilberdampflampe gedacht. Das Überschußwasser wird über die bereits beschriebenen Überlaufeinrichtungen, die hier nicht gezeichnet sind, in die Grauwasserkammer 266 weitergeleitet. In der Einlaufkammer für Grauwasser liegt ein koaxialer Ringfilter 236, der sowohl als mechanischer Tiefenfilter wirkt, dann, wenn Abwasser in die Kammer eingeleitet wird, als auch als Tropfkörper, der zeitweise von einer Zirkulationseinrichtung 239 über eine Düse 237 beregnet wird.

Das Überschußwasser wird in bekannter Weise über Überläufe 128 in den Pufferspeicher 268 geleitet. Das Wasser durchfließt unter dem Einfluß der Schwerkraft den Filter 203, der beispielsweise ein vertikal von oben nach unten durchströmter Sandfilter ist. Die Rückspülung kann dabei über die Entnahmekanäle 258 erfolgen, wobei die Rückströmung durch die Einlaßöffnung der Kammer durch ein Ventil verhindert wird. Die Oberseite der Kammer 202 ist vertieft ausgebildet, um Sedimente 72 festzuhalten. Das Filtrat fließt über die Ableitung 24 entweder zur Versickerung oder kann als Brauchwasser genutzt werden. Je nach Verwendungszweck des Brauchwassers kann der beschriebene Filter 203 auch innerhalb oder in Fließrichtung nach der Entnahmekammer 178 im Brauchwasserabteil 264 angeordnet werden. Der Stoffeintrag in den Filter wird dabei durch die Kapselung stark reduziert.

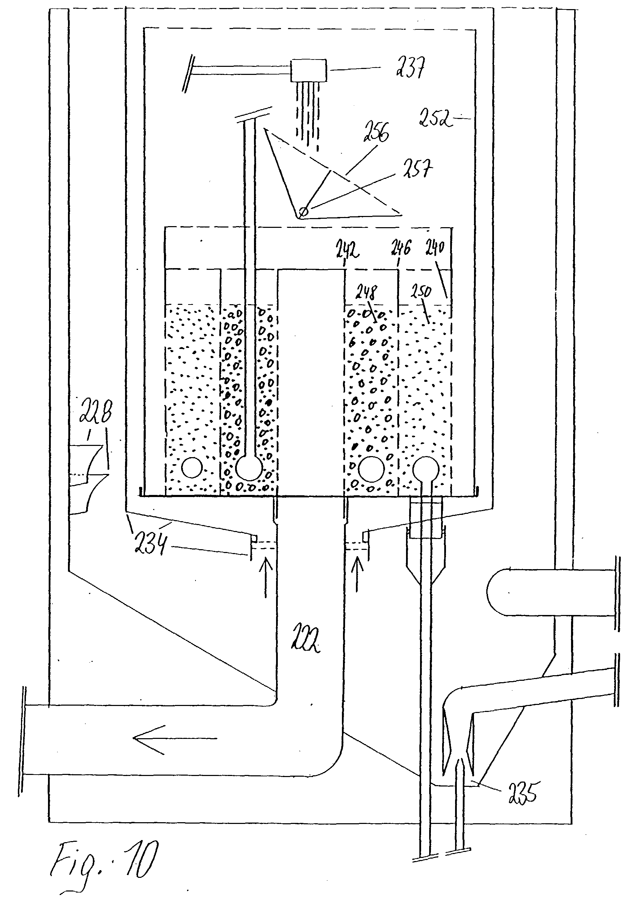

Fig. 10 zeigt einen beispielhaft ausgeführten wartungsarmen, dreischaligen, konzentrischen Ringfilter mit zwei unterschiedlichen Filterschüttungen 248/250. Die gezeigte Bauweise wird bei größerem Wasserbedarf sinnvoll, etwa bei Verbundsystemen, die mehrere Abnehmer mit Brauchwasser versorgen. Die äußere Siebwand 240, die Zwischensiebwand 246 und die innere Siebwand 242 sind dabei nicht im ganzen Bereich durchlässig, sondern sind im oberen Bereich dicht ausgeführt. Der Filter kann über im unteren Bereich des Filters angeordnete Rückspülleitungen regeneriert werden. Das jeweilige Schüttgut 248/250 im filter füllt deshalb nicht das ganze hohlzylinderförmige Kammervolumen aus, sondern läßt im oberen Bereich, in Höhe der dichten Siebrohre ein freies Volumen, um eine Bewegung der Filterschüttung 248/250 während des Spülvorgangs zu ermöglichen. Die Ableitung des Spülwassers erfolgt über die durchlässige obere Begrenzung des Filters, die am äußeren Rand von einem Kragen umgeben ist. Die Zufuhr des Spülwassers erfolgt wahlweise über eine lösbare Steckverbindung unter dem Filtergehäuse oder über eine Leitung, die von oben in den Filter lösbar hineingeführt ist. Das Spülwasser kann mitsamt dem Bodenschlamm über eine Wasserstrahlpumpe 233 aus einer Vertiefung 235 des Kammerbodens abgezogen werden. Der Ringfilter wird äußerlich von einem Zusatzsieb 252 umgeben, das in einer Nut auf dem flanschförmig nach außen geführten Filterboden steht. Eine wesentlich verbesserte Abscheidung von Sedimenten ist durch die Tauchwand 234 gegeben, die zusammen mit den Leiteinrichtungen 228 an der Kammerwandung eine nach unten gerichtete Zirkularströmung erzeugt. Der Wassereintritt zum Filter erfolgt von der Filterunterseite her über einen ringförmigen Spalt um das Standrohr 222. Die Aufgabe des Berieselungswassers erfolgt über eine Düseneinrichtung 237 und eine Wippe 256 mit zwei Kammern, die um die Drehachse 257 kippbar gelagert ist. Wie bereits ausgeführt, ergibt sich bei dieser Anordnung eine erzwungene, schwallförmige Abgabe des Wippeninhalts alternierend nach zwei Seiten. Das ausgekippte Wasser sammelt sich in dem wannenförmig ausgebildeten Oberteil des Filters und perkoliert dann durch eine Perforation im Filtergehäuse durch die Filterschüttung 248/250. Das wannenförmige Oberteil besitzt, nicht gezeichnete, Stege, die dem Filter das aufgegebene Perkolationswasser abschnittweise zuleiten.

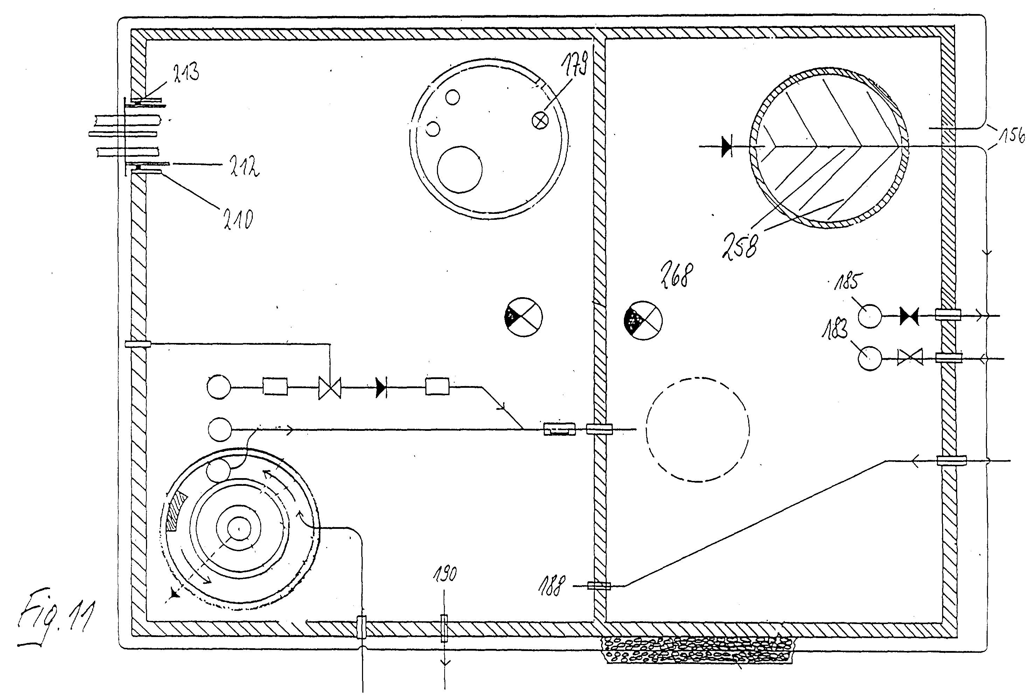

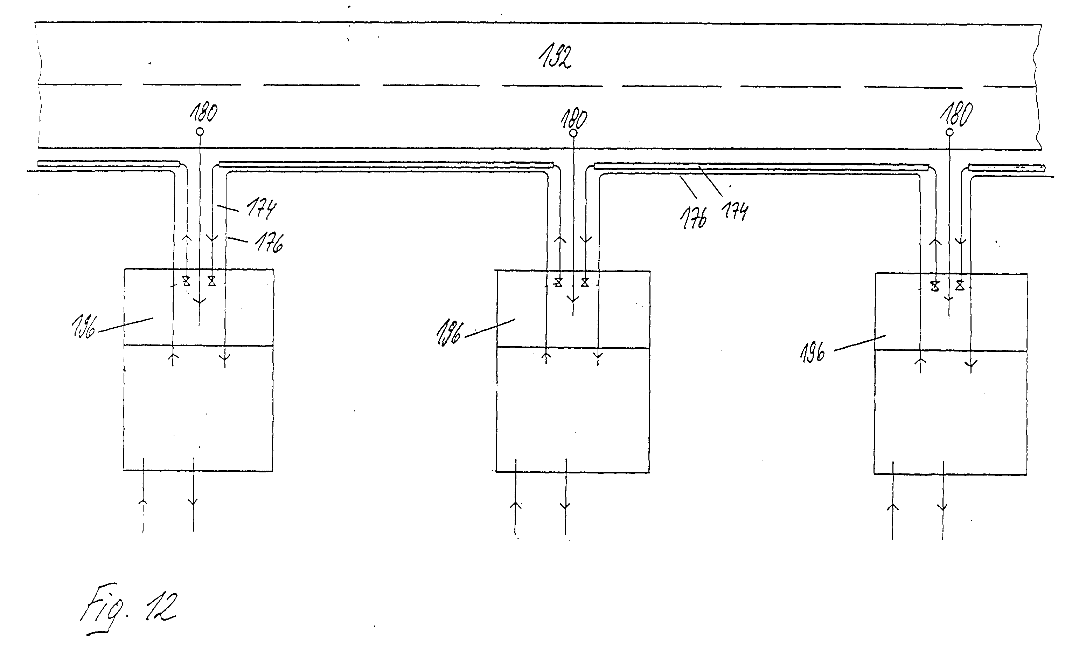

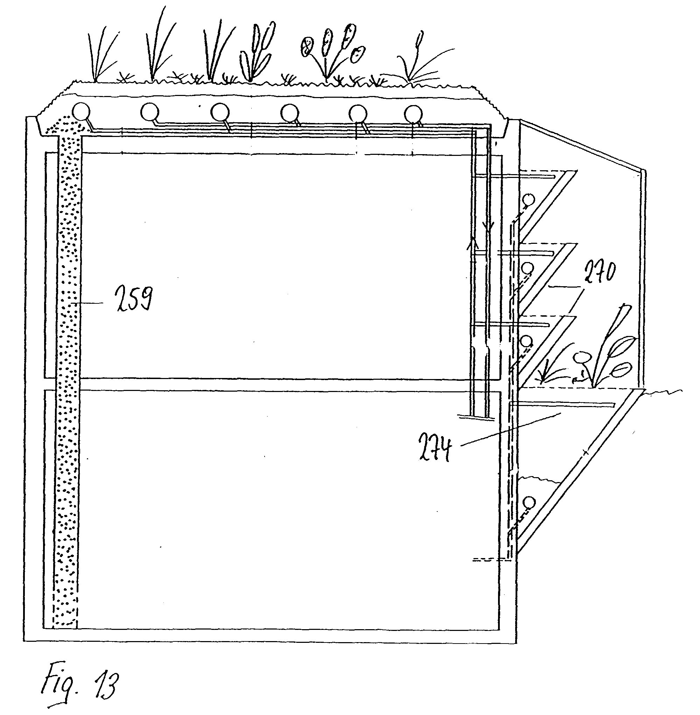

Fig. 11 zeigt den Grundriß eines beispielhaften Bauwerks mit zwei Speicherabteilen 264/268, eines für Brauchwassernutzung 264 mit eingangsseitigem Ringfilter und eines für Pufferung und Reinigung von Abwasser zur Versickerung, das im Verbund mit gleichartigen Bauwerken geschaltet ist. Überschüssiges Brauchwasser aus einer benachbarten Anlage fließt über die Leitung 188 in den Brauchwasserspeicher 264 des Bauwerks, während Überschußwasser über die Brauchwasserleitung 190 oder die Abwasserleitung zum nächsten Bauwerk fließt. Die Ein- und Auslaßleitung münden jeweils in ein Standrohr 183/185 und sind einzeln absperrbar (184/186). Das Absperren kann von oberhalb der Abdeckplatte 10 über dem Speicherbereich 12 mittels einer nicht gezeichneten Vorrichtung erfolgen. Weiterhin ist die kombinierte Rohrdurchführung 212 im Detail dargestellt. Das Einsteckteil 212, die Muffe 210 und die Dichtung 213 sind aus handelsüblichen Formteilen aus der Entwässerungstechnik hergestellt. Im Falle der Herstellung des Bauwerks aus Beton ist die Muffe 212 bei der Herstellung der Bauwerkswandung in die Schalung miteingesetzt und mit dem Beton in die Wandung eingerüttelt.

Die Ableitung aus der Pufferkammer 268 erfolgt über einen zylindrisch ausgeführten Tiefenfilter, beispielsweise ein Sandfilter oder einen Sinterfilter. Die Ableitung aus dem Filter erfolgt über ein Kanalsystem 258 am Kammerboden nach außen in die Sickerringleitung 156 Bezugszeichen 179 zeigt eine Strahlenquelle zur Entkemung des Wassers.

Fig. 12 gibt ein Beispiel für den Verbund zwischen mehreren Bauwerken gleicher Bauart. Überschüssiges Brauchwasser wird über Leitungsschlaufen 176 in benachbarte Bauwerke weitergeleitet. Im Falle von zu versickerndem Abwasser sind einzelne Leitungsstränge 174 als Sickerleitung ausgebildet. Die versiegelte Fläche 192 wird über oberflächliche Anschlüsse 180 in den Pufferspeicher 196 der jeweiligen Bauwerke geleitet, dort über eine Filtereinrichtung gereinigt und unterhalb des Bauwerks versickert. Die weiterführenden Leitungen 174/176 sind über Standrohre in die jeweiligen Speicher eingeführt, so daß nur bei vollem Speicher und ggf. voller Sickerleitung eine Einleitung in das nächste Bauwerk erfolgt. Das Ende der letzten Ableitung ist als oberflächlicher Austritt ausgebildet.

Fig. 13 zeigt eine Bauform die auch die Außenflächen des Bauwerks für Filterzwecke nutzt. In den Trögen 270 und auf dem Bauwerksdach sind vorgefertigte Bodenkörper 274 mit Bepflanzung eingebracht. Der Bodenfilter nutzt dabei das Vermögen der Pflanzenwurzeln aus, den Bodenkörper 274 permanent durchlässig zu erhalten, so daß keine Verschlämmung einsetzt, und den Boden zu belüften. Diese Bauweise wird bevorzugt für die Grauwasser-Aufbereitung und -Entsorgung eingesetzt, wobei im Sommer die erhöhte Transpiration der Pflanzen den Wasserverbrauch so erhöht, daß kein Abfluß entsteht. Im Winter sorgt eine strahlungsdurchlässige Abdeckung für eine schnelle Erwärmung während des Tages, so daß auch im Winter ein dauerhaftes Einfrieren nicht auftritt. Bei großer Trockenheit werden die Bodenkörper kapillar über die Leitung 259 aus dem Speicher mit Wasser versorgt. Im einfachsten Falle besteht die Füllung der Leitung aus Sand mit definierter Korngrösse. Durch die Wahl der Körnung läßt sich die maximale Förderrate bestimmen. Bei der Bepflanzung ist nicht nur daran gedacht, die Filtereigenschaft der Bodenkörper zu nutzen, sondern auch nur an eine Bauwerksbepflanzung aus ästhetischen und klimatischen Gründen.

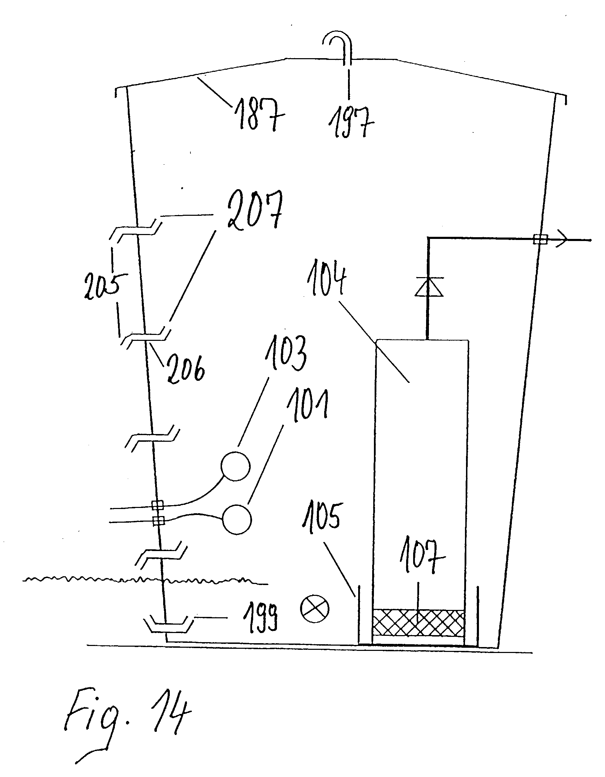

Fig. 14 zeigt eine besonders bevorzugte Bauweise einer Entnahmekammer. Dabei ist die Kammer im Format einer Regentonne hergestellt mit abnehmbarem zugehörigem Deckel 187. Die Einleitung des Wassers erfolgt über Doppelknie-Krümmer 206, wobei der Eintritt 205 des zu entnehmenden Wassers in das Kammergehäuse niedriger liegt als der Austritt 207 aus der Wand des Kammergehäuses in dessen Innenraum. Der unterste Krümmer 199 ist mit seiner Außenseite um 180° nach oben gedreht ist. Der minimale Wasserstand im Speicher liegt oberhalb dieses Krümmers 199, so daß durch diesen Krümmer 199 ein Einwandern von Schwimmstoffen in die Kammer zu erwarten ist. Durch die nach oben ausgerichtete Öffnung kann der Krümmer 199 ganz unten, nahe des Kammerbodens angebracht sein, so daß der Speicher bis auf ein geringeres Restvolumen entleert werden kann. Die Entnahmepumpe 104 steht innerhalb einer Tasse 105 auf dem Boden, so daß kein abgelagertes Sediment in die Ansaugöffnung 107 gelangt. Die Kammer enthält weiterhin vorgefertigt eingebaute Schwimmschalter zur Steuerung der Frischwasserzuleitung 103 und zur Sicherung der Pumpe 104 gegen Trockenlaufen 101. Die Anschlußkabel der Schwimmschalter und der Pumpe 104 sowie die Entnahmeleitung sind durch mit der Kammerwand verschraubte Kabeldurchführungen geführt, wobei diese gleichzeitig als mechanische Befestigung der Schwimmschalter und der Abpumpleitung wirken. Der Deckel 187 der Kammer besitzt eine Entlüftungsöffnung 197, die auch als Wassereinlaß wirkt. Dadurch wird dem Aufschwimmen des gewölbten Deckels 187 entgegengewirkt.

## Patentansprüche

1. Anwendung eines Bauwerks in Fertigbauweise aus Stahlbeton oder einem Ersatzstoff mit einem Boden, Seitenwänden und Stirnwänden sowie einer oberhalb des Bodens verlaufenden Abdeckplatte (10), wobei die Abdeckplatte die Basis einer Stellfläche für mindestens ein Kraftfahrzeug bildet und der unterhalb der Abdeckplatte befindliche Bereich des Bauwerks zum Einbau im Erdreich vorgesehen ist und wobei unterhalb der Abdeckplatte innerhalb des Bauwerks ein Flüssigkeitsspeicher mit Ein- und Auslaß ausgebildet ist,
dadurch **gekennzeichnet**,
daß die Abdeckplatte (10) zur Einbeziehung in eine Parkfläche (16) verwendet wird,
und daß zum Füllen des Flüssigkeitsspeichers (12) Niederschlagswasser und/oder Abwasser und/oder Grund- oder Oberflächenwasser verwendet wird, das durch den Einlaß (14) dem Wasserspeicher (12) zuläuft und nachher über den Auslaß (24) des Wasserspeichers als Brauchwasser und/oder Entsorgungswasser und/oder Versickerungswasser benutzt wird.

2. Anwendung nach Anspruch 1, dadurch gekennzeichnet, daß die Abdeckplatte (10) unmittelbar als Parkfläche (16) verwendet wird.

3. Bauwerk in Fertigbauweise aus Stahlbeton oder einem Ersatzstoff mit einem Boden, Seitenwänden und Stirnwänden sowie einer oberhalb des Bodens verlaufenden Abdeckplatte (10), wobei die Abdeckplatte die Basis einer Stellfläche für mindestens ein Kraftfahrzeug bildet und der unterhalb der Abdeckplatte befindliche Bereich des Bauwerks zum Einbau im Erdreich vorgesehen ist und wobei unterhalb der Abdeckplatte innerhalb des Bauwerks ein in einem Wasserkreislauf geschalteter Wasserspeicher mit Ein- und Auslaß ausgebildet ist,
dadurch gekennzeichnet, daß die Abdeckplatte (10) in eine Parkfläche (16) einbezogen ist,
und daß der Wasserkreislauf ein offener Kreislauf ist mit einem Zulaufanschluß für Niederschlagswasser und/oder Abwasser und/oder Grund- oder Oberflächenwasser und mit einem Entnahmeauslaß (24) für Brauchwasser und/oder Entsorgungswasser und/oder Versickerungswasser.

4. Bauwerk nach Anspruch 3, dadurch gekennzeichnet, daß die Abdeckplatte (10) als Trägerplatte für eine die Parkfläche bildende, vor Ort herzustellende Verkehrsflächenschicht (18) vorbereitet ist.

5. Bauwerk nach Anspruch 4, dadurch gekennzeichnet, daß die Oberseite der Trägerplatte allein oder in Zusammenwirken mit einer Auflageschicht (20) als Horizontaldrainage (22) ausgebildet ist.

6. Anwendung eines transportablen Bauwerks in Fertigbauweise aus Stahlbeton oder einem Ersatzstoff mit einem Boden, Seitenwänden und Stirnwänden sowie einer oberhalb des Bodens verlaufenden Abdeckplatte, wobei die Abdeckplatte eine Bodenplatte (10) einer Raumzelle (30), insbesondere Garagenzelle, bildet und der unterhalb der Abdeckplatte befindliche Bereich des Bauwerks zum Einbau im Erdreich vorgesehen ist, und wobei unterhalb der Abdeckplatte innerhalb des Bauwerks ein Flüssigkeitsspeicher (12) mit Ein- und Auslaß ausgebildet ist, dadurch gekennzeichnet,
daß der Flüssigkeitsspeicher (12) als Speicher für durch Niederschlagswasser und/oder Abwasser und/oder Grund- oder Oberflächenwasser gespeistes Brauch-, Entsorgungs- und/oder Versickerungswasser verwendet wird.

7. Transportables Bauwerk in Fertigbauweise aus Stahlbeton oder einem Ersatzstoff mit einem Boden, Seitenwänden und Stirnwänden sowie einer oberhalb des Bodens verlaufenden Abdeckplatte, wobei die Abdeckplatte eine Bodenplatte (10) einer Raumzelle (30), insbesondere Garagenzelle, bildet und der unterhalb der Abdeckplatte befindliche Bereich des Bauwerks zum Einbau im Erdreich vorgesehen ist, und wobei unterhalb der Abdeckplatte innerhalb des Bauwerks ein in einem Flüssigkeitskreislauf geschalteter Flüssigkeitsspeicher (12) ausgebildet ist,
dadurch gekennzeichnet, daß der Flüssigkeitskreislauf ein offener Kreislauf mit einem Zulaufanschluß (14) und einem Entnahmeauslaß (24) ist.

8. Bauwerk nach einem der Ansprüche 3 bis 5 und 7, bei dem der Flüssigkeitsspeicher in Vorfertigung in den Wandaufbau des Bauwerks einbezogen ist, dadurch gekennzeichnet, daß der Wandaufbau (32) des Bauwerks selbst den tragenden Körper des Wasserspeichers (12) bildet.

9. Bauwerk nach Anspruch 8, dadurch gekennzeichnet, daß der tragende Körper (32) des Wasserspeichers (12) aus wasserdichter Material der Bauwerkswandung besteht.

10. Bauwerk nach Anspruch 8, dadurch gekennzeichnet, daß der tragende Körper (32) des Wasserspeichers (12) aus wasserdurchlässigem Material, vorzugsweise Beton, der Bauwerkswandung mit einer wasserdichten Innenschicht (34) besteht.

11. Bauwerk nach einem der Ansprüche 1 bis 10, dadurch gekennzeichnet, daß der Wasserspeicher die gesamte innere Grundfläche des Bauwerks einnimmt.

12. Bauwerk nach einem der Ansprüche 1 bis 10, dadurch gekennzeichnet, daß der Wasserspeicher (12) mindestens 75%, vorzugsweise mindestens 90%, höchst vorzugsweise mindestens 95%, der gesamten inneren Grundfläche des Bauwerks einnimmt und in dem trockenen Restvolumen (36) über dem Boden Einrichtungen zur Förderung und/oder Steuerung angeordnet sind.

13. Bauwerk nach einem der Ansprüche 1 bis 12, dadurch gekennzeichnet, daß der Boden, die Seitenwände und die Stirnwände eine integral vorgefertigte oben offene Schale bilden, die mit der ebenfalls integral vorgefertigten Abdeckplatte zu einem Baukörper vereinigt ist.

14. Bauwerk nach einem der Ansprüche 7 bis 12 und Anspruch 13, dadurch gekennzeichnet, daß die Abdeckplatte (10) integraler Bestandteil einer vorgefertigten Garagen- oder Raumzelle (38) ist.

15. Bauwerk nach einem der Ansprüche 1 bis 12, dadurch gekennzeichnet, daß die Abdeckplatte (10) und die Seitenwände (44) monolithisch vorgefertigt und mit einem vorgefertigten Boden (46) vereint sind.

16. Bauwerk nach einem der Ansprüche 12 bis 14, dadurch gekennzeichnet, daß die Abdeckplatte (10) bzw. der Boden (46) lose an das übrige Bauwerk anschließen.

17. Bauwerk nach einem der Ansprüche 12 bis 14, dadurch gekennzeichnet, daß die Abdeckplatte (10) bzw. der Boden (46) vor Ort untereinander verbindbar sind.

18. Bauwerk nach einem der Ansprüche 7 bis 17, dadurch gekennzeichnet, daß der unterhalb der Ebene der Abdeckplatte gelegene Bereich (48) des Bauwerks eine von der Garagen- oder Raumzelle verschiedene, vorzugsweise geringere, horizontale Erstreckung hat.

19. Bauwerk nach einem der Ansprüche 7 bis 18, dadurch gekennzeichnet, daß in dem Bereich (48), in dem die Garagen- oder Raumzelle den tieferen Bereich des Bauwerks überlappt, dieser tiefere Bereich als Fundament (50) der Garagen- oder Raumzelle (30) vorgesehen ist.

20. Bauwerk nach einem der Ansprüche 1 bis 19, dadurch gekennzeichnet, daß mindestens Teilbereiche der unterhalb der Abdeckplatten gelegenen Wandung des Bauwerks gegebenenfalls auch die Abdeckplatte oder gar darüber gelegene Wandungsbereiche des Bauwerks aus einem gebundenen Recyclat, bestehen.

21. Bauwerk nach einem der Ansprüche 7 bis 20, dadurch gekennzeichnet, daß es das Format einer Doppelparkergarage mit der Abdeckplatte als Zwischenboden hat.

22. Bauwerk nach einem der Ansprüche 1 bis 21, dadurch gekennzeichnet, daß der Wasserspeicher zusätzlich mit einer Frischwasserzuführung (52) versehen ist.

23. Bauwerk nach einem der Ansprüche 1 bis 22, gekennzeichnet durch eine Entlüftungseinrichtung (64) für den unterhalb der Abdeckplatte gelegenen Raum des Bauwerks, vorzugsweise unter Verwendung eines durch die Abdeckplatte hindurchgeführten Rohres.

24. Bauwerk nach Anspruch 23 in Verbindung mit einem der Ansprüche 7 bis 22, dadurch gekennzeichnet, daß das zur Entlüftung dienende Rohr (64) koaxial mit einem zur Entwässerung der Oberseite des Dachs der Garagen- oder Raumzelle vorgesehenen Rohrs (68) angeordnet ist.

25. Bauwerk nach einem der Ansprüche 1 bis 24, dadurch gekennzeichnet, daß der Wasserspeicher in mindestens zwei Abteilungen für unterschiedliche Wassernutzung und -behandlung unterteilt ist.

26. Bauwerk nach einem der Ansprüche 1 bis 25, gekennzeichnet durch eine Füllstandsanzeige des Wasserspeichers bzw. je eine Füllstandsanzeige (74) im Falle von Anspruch 26 der in den verschiedenen Abteilungen angeordneten unterschiedlichen Wasserspeicher und Kammergehäuse.

27. Bauwerk nach einem der Ansprüche 1 bis 26, gekennzeichnet durch eine Umschalteinrichtung (86) zum Umschalten des maximalen Wasserpegels im jeweiligen Wasserspeicher zwischen einem Sommer- und einem Winterbetrieb unter Berücksichtigung der am Aufstellungsort vorauszusetzenden Frosttiefe (88) im umgebenden Erdreich (96) des Bauwerks.

28. Bauwerk nach Anspruch 27, gekennzeichnet durch eine automatische, von einem Temperatursensor (98) geführte Steuerung der Umschalteinrichtung.

29. Bauwerk nach Anspruch 28, dadurch gekennzeichnet, daß als Bodentemperatursensor ein hydromechanisches Element (100) vorgesehen ist.

30. Bauwerk nach einem der Ansprüche 1 bis 29, gekennzeichnet durch eine Überlaufseinrichtung, im Fall von unterschiedlichen Pegeln bei Sommer- und Winterbetrieb je mindestens einen Überlauf, zur Abführung von Überflußwasser.

31. Bauwerk nach Anspruch 30, dadurch gekennzeichnet, daß ein erster Überlauf (108) am maximalen Sollpegel für Sommerbetrieb (90) und ein zweiter Überlauf (110) am maximalen Sollpegel für Winterbetrieb (92) angeordnet sind, und daß der zweite Überlauf (110) mit einer bei Sommerbetrieb wirksamen Absperreinrichtung (114) kombiniert ist.

32. Bauwerk nach Anspruch 31, dadurch gekennzeichnet, daß der zweite Überlauf mit einem Ventil (124) versehen ist, das vorzugsweise von dem Temperatursensor (98) gemäß Anspruch 29 gesteuert ist und in Fließrichtung nach diesem Ventil eine Rücklaufsperre (116) liegt.

33. Bauwerk nach einem der Ansprüche 1 bis 32, gekennzeichnet durch Durchführung eines Ablaufs (128) von Überschußwasser einer Überlaufeinrichtung durch den Bauwerkskörper, vorzugsweise durch dessen Boden.

34. Bauwerk nach Anspruch 33, gekennzeichnet durch ein im Wege der Durchführung angebrachtes Rückschlagventil (136) als Aufschwimmsicherung des Bauwerks.

35. Bauwerk nach einem der Ansprüche 1 bis 34, gekennzeichnet durch Auflagerung auf einem wasserdurchlässigen Schüttgut, vorzugsweise einer Kiesschicht (132).

36. Bauwerk nach einem der Ansprüche 33 bis 35, dadurch gekennzeichnet, daß die Unterseite des Bodens mit Drainagekanälen (148) oder mindestens einem Muster aus zur Auflagerung dienenden Stegen (150) und mindestens einer dazwischen angeordneten Aussparung (152) ausgebildet ist.

37. Bauwerk nach einem der Ansprüche 33 bis 36, gekennzeichnet durch eine an der Außenseite der Seitenwände und/oder Stirnwände errichtete wasserdurchlässige Schicht (134), die vorzugsweise mit dem Bauwerk in Vorfertigung verbunden ist.

38. Bauwerk nach einem der Ansprüche 33 bis 37, gekennzeichnet durch Verbindung (154) der Durchführung mit einer rings um das Bauwerk verlaufenden Ringsickerleitung (156.

39. Bauwerk nach einem der Ansprüche 33 bis 38, gekennzeichnet durch abschnittsweise, vorzugsweise vom Raum oberhalb der Abdeckplatte (10) betätigbare Absperreinrichtungen (184/186) im Ein- und Ausleitbereich von Überschußwasser des jeweiligen Bauwerks.

40. Bauwerk nach einem der Ansprüche 1 bis 39, dadurch gekennzeichnet, daß im Wasserspeicher eine Pumpe (104) oder eine Ansaugöffnung (200) einer Abpumpleitung innerhalb eines mit dem Boden dicht verbundenen oder selbst mit eigenem geschlossenen Boden versehenen Kammergehäuses (178) angeordnet ist, in dem ein Schwimmstoffe abweisender Wassereinlaß aus dem Wasserspeicher ausgebildet ist.

41. Bauwerk nach Anspruch 40, dadurch gekennzeichnet, daß der Schwimmstoffe abweisende Wassereinlaß von mehreren über die Höhe des Kammergehäuses (178) verteilten Kanälen (204) mit einer Neigung von außen unten nach innen oben gebildet ist.

42. Bauwerk nach Anspruch 41, dadurch gekennzeichnet, daß die Kanäle in der Wand des Kammergehäuses (202) ausgebildet sind.

43. Bauwerk nach Anspruch 41, daß die Kanäle von durch die Wand des Kammergehäuses hindurchgeführten Rohrkrümmern (206) vorzugsweise doppelten Rohrknien gebildet sind.

44. Bauwerk nach einem der Ansprüche 1 bis 43, dadurch gekennzeichnet, daß der Zulaufanschluß von Niederschlagswasser und/oder Abwasser in den Wasserspeicher in einer sich vom Bodenbereich des Wasserspeichers mit geschlossenem Bodenteil und geschlossenem Wandteil nach oben erstreckenden Einlaßkammer (218) mit oben vorzugsweise offenem oder öffenbarem Ende mündet, daß an der Oberseite des Bodenteils eine Abscheidzone (220) für Sinkstoffe vorgesehen ist und daß innerhalb der Einlaßkammer ein Wasserauslaßrohr (222) nach oben ragt, das mit dem Bodenbereich des Wasserspeichers auslaßseitig kommuniziert.

45. Bauwerk nach Anspruch 44, dadurch gekennzeichnet, daß in der Abscheidzone ein herausnehmbarer Schlammfang (224) angeordnet ist.

46. Bauwerk nach Anspruch 44 oder 45, dadurch gekennzeichnet, daß der Boden der Einlaßkammer vom Boden des Gehäuses gebildet ist.

47. Bauwerk nach einem der Ansprüche 44 bis 46, dadurch gekennzeichnet, daß das Wasserauslaßrohr (222) zentrisch in der vorzugsweise zylindrischen Einlaßkammer angeordnet ist.

48. Bauwerk nach einem der Ansprüche 44 bis 47, dadurch gekennzeichnet, daß das Wasserauslaßrohr (222) aus einem im Wandteil durchgeführten Rohrkrümmer (230) und aus einem in diesem lösbar eingesteckten Standrohr zusammengesetzt ist.

49. Bauwerk nach einem der Ansprüche 44 bis 47, dadurch gekennzeichnet, daß der Zulaufanschluß (226) in der Einlaßkammer tangential mündet.

50. Bauwerk nach einem der Ansprüche 44 bis 49, dadurch gekennzeichnet, daß das oben offene Ende des Wasserauslaßrohres (222) in Höhe der Mündung des Zulaufanschlusses in der Einlaßkammer angeordnet ist.

51. Bauwerk nach den Ansprüchen 49 und 50, gekennzeichnet durch an der Innenseite des Wandteils der Einlaßkammer angeordnete Leitflächen (228), die so angeordnet und ausgebildet sind, daß sie die tangentiale Einströmung in eine nach unten gerichtete Zirkularströmung umleiten.

52. Bauwerk nach einem der Ansprüche 44 bis 51, dadurch gekennzeichnet, daß sich von der oberen Einlaßöffnung des Wasserauslaßrohres ein Siebrohr (232) nach oben erstreckt, das vorzugsweise mit dem Wasserauslaßrohr steckbar verbunden ist.

53. Bauwerk nach einem der Ansprüche 44 bis 51, dadurch gekennzeichnet, daß sich von der oberen Einlaßöffnung des Wasserauslaßrohres ein Ringfilter (236) nach oben erstreckt, dessen Innenraum mit dem Wasserauslaßrohr und dessen Außenfläche mit dem Innenraum der Einlaßkammer kommuniziert.

54. Bauwerk nach Anspruch 53, dadurch gekennzeichnet, daß der Ringfilter zylindrisch ausgebildet ist.

55. Bauwerk nach Anspruch 53, dadurch gekennzeichnet, daß der Ringfilter ein Faltenfilter (238) ist.

56. Bauwerk nach Anspruch 53, dadurch gekennzeichnet, daß der Ringfilter vieleckig ausgebildet ist.

57. Bauwerk nach einem der Ansprüche 53 bis 56, dadurch gekennzeichnet, daß der Ringfilter eine äußere (240) und eine innere (242) Siebwand und einen dazwischen angeordneten herausnehmbaren, vorzugsweise ersetzbaren oder regenerierbaren, Filtereinsatz (244) aufweist.

58. Bauwerk nach Anspruch 57, dadurch gekennzeichnet, daß der Filtereinsatz von einem filterwirksamen Schüttgut gebildet ist.

59. Bauwerk nach einem der Ansprüche 53 bis 58, dadurch gekennzeichnet, daß der Ringfilter von dem Wasserauslaßrohr (222) getragen, vorzugsweise mit diesem steckbar verbunden, ist.

60. Bauwerk nach einem der Ansprüche 53 bis 59, dadurch gekennzeichnet, daß der Ringfilter mindestens eine umlaufende wasserdurchlässige Zwischensiebwand (246) aufweist und die dabei abgeteilten radial inneren (248) und radial äußeren (250) Abteilungen mit unterschiedlichem Filtermaterial angefüllt sind.

61. Bauwerk nach einem der Ansprüche 53 bis 60, dadurch gekennzeichnet, daß den Ringfilter ein Zusatzsieb (252), das vorzugsweise lösbar vom Ringfilter getragen ist, zur Abweisung von Grobstoffen gegen radiale Einwanderung zum Ringfilter umgibt.

62. Bauwerk nach einem der Ansprüche 53 bis 61, dadurch gekennzeichnet, daß der Ringfilter mit einer Rückspüleinrichtung (254) versehen ist.

63. Bauwerk nach einem der Ansprüche 53 bis 61, dadurch gekennzeichnet, daß der Ringfilter mit einer zeitweise, vorzugsweise periodisch, betätigbaren Selbstreinigungseinrichtung versehen ist, wobei vorzugsweise belüftetes Wasser aus dem Wasserspeicher auf den Ringfilter aufgegeben oder mindestens aufgetropft wird.

64. Bauwerk nach Anspruch 63, dadurch gekennzeichnet, daß das zur Selbstreinigung verwendete Wasser aus einer Abzweigung der Abpumpleitung hinter der Pumpe über eine steuerbare Ventileinrichtung zugeleitet ist.

65. Bauwerk nach einem der Ansprüche 31 bis 64, gekennzeichnet durch einen dritten Überlauf (112), der mit seiner Mündung in der Einlaßkammer oberhalb des Ringfilters angeordnet ist und der etwa um die Höhe des Widerstands des Ringfilters, gemessen als Höhe einer Wassersäule, höher angeordnet ist als der erste Überlauf (108).

66. Bauwerk nach Anspruch 65, dadurch gekennzeichnet, daß die Auslässe von erstem (108) und drittem Überlauf (112) zusammengeschaltet sind, bei Anordnung eines Geruchsverschlusses (122) vor diesem.

67. Bauwerk nach einem der Ansprüche 1 bis 65, dadurch gekennzeichnet, daß als Wasserauslaß aus dem Wasserspeicher oder aus mindestens einer Abteilung des Wasserspeichers im Falle unterschiedlicher Nutzung und/oder aus einem Kammergehäuse des Speichers mindestens ein Schütt- oder Feststofffilter (203) vorgesehen ist, der auslaßseitig im Falle der Versickerung mit wasserleitfähigem Grund (103) oder Boden außerhalb des Bauwerks kommuniziert oder zur Ableitung oder Entnahme des Filtrats mit einer weiteren Leitung verbunden ist, die in eine andere Abteilung des Speichers mündet oder aus dem Bauwerk herausführt.

68. Bauwerk nach einem der Ansprüche 7 bis 67, gekennzeichnet durch eine auf dem Dach der Raumzelle oder Garage liegenden Filterschicht (260).

69. Bauwerk nach Anspruch 68, gekennzeichnet durch ein auf der Oberseite des Daches innerhalb der Filterschicht angebrachtem Dränsystem (262).

70. Bauwerk nach Anspruch 68, gekennzeichnet durch eine Ausbildung der Dachplatte als Drainage (262) allein oder in Zusammenwirken mit einer Filterschicht (260).

71. Bauwerk nach einem der Ansprüche 7 bis 68, gekennzeichnet durch mindestens eine an der Bauwerksaußenwand angebrachte, vorgefertigte trogartige Ausstülpung (270).

72. Bauwerk nach Anspruch 71, gekennzeichnet durch Verbindung der Ausstülpungen über Kanäle (272).

73. Bauwerk nach Anspruch 72, gekennzeichnet durch eine in den Vertiefungen der Ausstülpungen eingebrachte Filterschicht (260).

74. Bauwerk nach einem der Ansprüche 69 bis 73, gekennzeichnet durch eine werkseitige Bepflanzung (274) der Filterschicht (260).

75. Bauwerk nach einem der Ansprüche 69 bis 74, gekennzeichnet durch eine werkseitige Vorbereitung der Filterschicht (260) für eine bauseitige Bepflanzung.

76. Bauwerk nach einem der Ansprüche 70 bis 75, gekennzeichnet durch mindestens je eine Zu- (265) und Ableitung (267) auf die Dachfläche und zu jeder trogförmigen Ausstülpung, vorzugsweise im Innern des Bauwerks verlaufend, höchstvorzugsweise innerhalb der Bauwerkswandung.

77. Bauwerk nach den Ansprüchen 76 und 73, dadurch gekennzeichnet, daß jeweils mindestens eine Leitung zum Dach des Bauwerks und/oder zu jeweils einem Trog und/oder die Kanäle nach Anspruch 73 mit einem kapillar wasserleitendem Stoff (259) gefüllt sind.

78. Anwendung eines Bauwerks nach einem der Ansprüche 3 bis 77 im Verbund mit anderen Bauwerken gleicher Bauart über mindestens ein gemeinsames Leitungssystem (174/176), welches vorzugsweise die Bauwerke paarweise verbindet und welches zur Weiterleitung von Überschußwasser in ein in Fließrichtung benachbartes Bauwerk wirksam ist.

## Claims

1. Use of a building manufactured by a prefabrication method of reinforced concrete or a substitute with a bottom, side walls and front walls as well as a cover plate (10) extending above the bottom, wherein the cover plate forms the basis of a parking space for at least one motor vehicle, and the area of the building situated below the cover plate is provided for being fitted in the soil, and wherein below the cover plate a liquid storage with an inlet and an outlet is embodied within the building,
**characterized** in that,
the cover plate (10) is used for being included in a parking area (16),
and that for filling the liquid storage (12) rain water and/or waste water and/or groundwater or surface water are/is used, which is admitted to the water storage (12) through the inlet (14) and is afterwards used as non-potable water and/or sanitation water and/or infiltration water via the outlet (24) of the liquid storage.

2. Use according to claim 1, characterized in that the cover plate (10) is directly used as parking area (16).

3. Building manufactured by a prefabrication method of reinforced concrete or a substitute with a bottom, side walls and front walls as well as a cover plate (10) extending above the bottom, wherein the cover plate forms the basis of a parking space for at least one motor vehicle and the area of the building situated below the cover plate is provided for being fitted in the soil, and wherein below the cover plate a water storage included in a water circulation and having an inlet and an outlet is embodied within the building,
characterized in that the cover plate (10) is included in a parking area (16),
and that the water circulation is an open circulation with a supply connection for rain water and/or waste water and/or groundwater or surface water and with a taking outlet (24) for non-potable water and/or sanitation water and/or infiltration water.

4. Building according to claim 3, characterized in that the cover plate (10) is prepared as support plate for a traffic area layer (18) forming the parking area and being prepared in-situ.

5. Building according to claim 4, characterized in that the upper side of the support plate is designed as horizontal drainage (22) individually or in cooperation with a base layer (20).

6. Use of a portable building manufactured by a prefabrication method of reinforced concrete or a substitute with a bottom, side walls and front walls as well as a cover plate extending above the bottom, wherein the cover plate forms a bottom plate (10) of a spacial unit (30), preferably garage box, and the area of the building situated below the cover plate is provided for being fitted in the soil, and wherein below the cover plate a liquid storage (12) with inlet and outlet is embodied within the building, characterized in that,
the liquid storage (12) is used as storage for non-potable water, sanitation water and/or infiltration water fed by rain water and/or waste water and/or groundwater or surface water.

7. Portable building manufactured by a prefabrication method of reinforced concrete or a substitute with a bottom, side walls and front walls as well as a cover plate extending above the bottom, wherein the cover plate forms a bottom plate (10) of a spacial unit (30), preferably garage box, and the area of the building situated below the cover plate is provided for being fitted in the soil, and wherein below the cover plate a liquid storage (12) included in a liquid circulation is embodied within the building,
characterized in that the liquid circulation is an open circulation having a supply connection (14) and a taking outlet (24).

8. Building according to one of claims 3 to 5 and 7, wherein the liquid storage is included in the wall construction of the building by prefabrication, characterized in that the wall construction (32) itself of the building forms the load-bearing body of the water storage (12).

9. Building according to claim 8, characterized in that the load-bearing body (32) of the water storage (12) consists of watertight material of the building walls.

10. Building according to claim 8, characterized in that the load-bearing body (32) of the water storage (12) consists of water permeable material, preferably concrete, of the building walls with a watertight inner layer (34).

11. Building according to one of claims 1 to 10, characterized in that the water storage occupies the complete internal base surface of the building.

12. Building according to one of claims 1 to 10, characterized in that the water storage (12) occupies at least 75%, preferably at least 90%, most preferably at least 95%, of the complete internal base surface of the building and that in the dry remaining volume (36) means for delivering and/or controlling are arranged over the bottom.

13. Building according to one of claims 1 to 12, characterized in that the bottom, the side walls and the front walls form an integrally prefabricated basin which is open at the top and is combined with the likewise integrally prefabricated cover plate to form a solidium.

14. Building according to one of claims 7 to 12 and claim 13, characterized in that the cover plate (10) is an integral component of a prefabricated garage or spacial unit (38).

15. Building according to one of claims 1 to 12, characterized in that the cover plate (10) and the side walls (44) are monolithically prefabricated and combined with a prefabricated bottom (46).

16. Building according to one of claims 12 to 14, characterized in that the cover plate (10) or the bottom (46), respectively, loosely join the rest of the building.

17. Building according to one of claims 12 to 14, characterized in that the cover plate (10) or the bottom (46), respectively, can be connected to one another in-situ.

18. Building according to one of claims 7 to 17, characterized in that the area (48) of the building situated below the level of the cover plate has a horizontal extension which is different, preferably smaller, from that of the garage or spacial unit.

19. Building according to one of claims 7 to 18, characterized in that in the area (48), in which the garage or spacial unit overlaps the deeper area of the building, this deeper area is provided as foundation (50) of the garage or spacial unit (30).

20. Building according to one of claims 1 to 19, characterized in that at least partial areas of the walls of the building situated below the cover plates, optionally also the cover plate or even wall areas of the building situated above it, consist of a bound recycle material.

21. Building according to one of claims 7 to 20, characterized in that it has the format of a double deck garage with the cover plate being an intermediate bottom.

22. Building according to one of claims 1 to 21, characterized in that the water storage is additionally provided with a fresh water feeding (52).

23. Building according to one of claims 1 to 22, characterized by a vent means (64) for the room of the building situated below the cover plate, preferably using a pipe lead through the cover plate.

24. Building according to claim 23 in combination with one of claims 7 to 22, characterized in that the pipe (64) serving for vent is arranged coaxially with a pipe (68) provided for draining the upper side of the roof of the garage or spacial unit.

25. Building according to one of claims 1 to 24, characterized in that the water storage is subdivided into at least two compartments for various water uses and treatments.

26. Building according to one of claims 1 to 25, characterized by a level indicator of the water storage or a level indicator (74) each in case of claim 26, of the different water storages and chamber housings arranged in the various compartments.

27. Building according to one of claims 1 to 26, characterized by a switching means (86) for switching the maximum water level in the respective water storage between a summer and a winter operation taking into consideration the frost depth (88) in the surrounding soil (96) of the building to be expected at the location of installation.

28. Building according to claim 27, characterized by an automatic control of the switching means controlled by a temperature sensor (98).

29. Building according to claim 28, characterized in that a hydromechanic element (100) is provided as soil temperature sensor.

30. Building according to one of claims 1 to 29, characterized by an overflow arrangement, in case of different levels for the summer and winter operation at least one overflow in each case, for draining excess water.

31. Building according to claim 30, characterized in that a first overflow (108) is arranged at the maximum desired level for the summer operation (90) and a second overflow (110) is arranged at the maximum desired level for the winter operation (92), and that the second overflow (110) is combined with a shut-off or blocking means (114) active in the summer operation.

32. Building according to claim 31, characterized in that the second overflow is provided with a valve (124), which is preferably controlled by the temperature sensor (98) according to claim 29 and that in the flow direction behind this valve a one-way valve (116) is provided.

33. Building according to one of claims 1 to 32, characterized by leading through a drain (128) of excess water of an overflow arrangement through the body of the building, preferably through the bottom thereof.

34. Building according to claim 33, characterized by a non-return valve (136) mounted in the course of the leadthrough as a floating protection of the building.

35. Building according to one of claims 1 to 34, characterized by a support on water permeable coarse fraction material, preferably a layer of gravel (132).

36. Building according to one of claims 33 to 35, characterized in that the underside of the bottom is embodied with drainage ducts (148) or at least a pattern of webs (150) serving as support and with at least one recess (152) arranged therebetween.

37. Building according to one of claims 33 to 36, characterized by a water permeable layer (134) arranged at the outer side of the side walls and/or front walls, which is preferably connected in prefabrication with the building.

38. Building according to one of claims 33 to 37, characterized by a connection (154) of the leadthrough with a closed circular drain pipeline (156) allowing infiltration surrounding the building.

39. Building according to one of claims 33 to 38, characterized by shut off means (184/186) in the inlet and outlet area of excess water of the respective building, which means are operable section by section, preferably from the space above the cover plate (10).

40. Building according to one of claims 1 to 39, characterized in that in the water storage a pump (104) or a suction opening (200) of a pump out line is arranged within a chamber housing (178) tightly connected with the bottom or being provided itself with an own closed bottom, in which housing a water inlet from the water storage rejecting floating trash is embodied.

41. Building according to claim 40, characterized in that the water inlet rejecting floating trash is formed by several ducts (204) distributed over the height of the chamber housing (178) with an inclination from the outside at the bottom to the inside at the top.

42. Building according to claim 41, characterized in that the ducts are embodied in the wall of the chamber housing (202).

43. Building according to claim 41, characterized in that the ducts are formed by pipe bends (206), preferably double pipe bends, lead through the wall of the chamber housing.

44. Building according to one of claims 1 to 43, characterized in that the inlet connection of rain water and/or waste water opens into the water storage in an inlet chamber (218) extending from the bottom area of the water storage with a closed bottom part and a closed wall part to the top, with an upper end which preferably is open or can be opened, that at the upper side of the bottom part a separation zone (220) for settling solids is provided and that within the inlet chamber a water outlet pipe (222) extends to the top which is in communication with the bottom area of the water storage at the outlet side.

45. Building according to claim 44, characterized in that in the separation zone a removable mud trap (224) is arranged.

46. Building according to claim 44 or 45, characterized in that the bottom of the inlet chamber is formed by the bottom of the housing.

47. Building according to one of claims 44 to 46, characterized in that the water outlet pipe (222) is centrically arranged in the preferably cylindric inlet chamber.

48. Building according to one of claims 44 to 47, characterized in that the water outlet pipe (222) is composed of pipe bends (230) lead through in a wall part and of a stand pipe removably inserted therein.

49. Building according to one of claims 44 to 47, characterized in that the inlet connection (226) tangentially opens into the inlet chamber.

50. Building according to one of claims 44 to 49, characterized in that the upper open end of the water outlet pipe (222) is arranged at the level of the opening of the inlet connection in the inlet chamber.

51. Building according to claims 49 and 50, characterized by guiding surfaces (228) arranged on the inner side of the wall part of the inlet chamber, which are arranged and embodied such that they divert the tangentially incoming flow into a circular flow oriented towards the bottom.

52. Building according to one of claims 44 to 51, characterized in that a sieve pipe (232) extends from the upper inlet opening of the water outlet pipe towards the top, which is preferably insertably connected with the water outlet pipe.

53. Building according to one of claims 44 to 51, characterized in that a ring filter (236) extends from the upper inlet opening of the water outlet pipe towards the top, the internal space of which communicates with the water outlet pipe and the external surface of which communicates with the internal space of the inlet chamber.

54. Building according to claim 53, characterized in that the ring filter has a cylindrical design.

55. Building according to claim 53, characterized in that the ring filter is a folded filter (238).

56. Building according to claim 53, characterized in that the ring filter has a polygon design (238).

57. Building according to one of claims 53 to 56, characterized in that the ring filter comprises an external (240) and an internal (242) sieve wall and a filter insert (244) arranged therebetween, which can be removed, preferably replaced or regenerated.

58. Building according to claim 57, characterized in that the filter insert is formed by a coarse fraction material having a filter effect.

59. Building according to one of claims 53 to 58, characterized in that the ring filter is carried by the water outlet pipe (222), preferably being insertably connected thereto.

60. Building according to one of claims 53 to 59, characterized in that the ring filter comprises at least one circular water permeable intermediate sieve wall (246) and that the radially internal (248) and radially external (250) compartments separated thereby are filled with various filter materials.

61. Building according to one of claims 53 to 60, characterized in that the ring filter is surrounded by an additional sieve (252), which is preferably removably carried by the ring filter, for stopping coarse fraction material from a radial migration to the ring filter.

62. Building according to one of claims 53 to 61, characterized in that the ring filter is provided with a backwashing device (254).

63. Building according to one of claims 53 to 61, characterized in that the ring filter is provided with a temporarily, preferably periodically, operable self-cleaning means, wherein preferably aerated water from the water storage is applied or at least dropped onto the ring filter.

64. Building according to claim 63, characterized in that the water used for the self-cleaning is supplied from a branch of the pump out line behind the pump via a controllable valve means.

65. Building according to one of claims 31 to 64, characterized by a third overflow (112) which is arranged with its mouth in the inlet chamber above the ring filter and which is arranged higher than the first overflow (108), i.e. higher by the height of the resistance of the ring filter, measured as the height of a water column.

66. Building according to claim 65, characterized in that the outlets of the first (108) and the third (112) overflows are connected, an odour trap being arranged in front of it.

67. Building according to one of claims 1 to 65, characterized in that as water outlet of the water storage or at least of one compartment of the water storage in case of a varying use and/or of a chamber housing of the storage, at least one coarse fraction material or solid material filter (203) is provided, which, in case of the percolation, communicates on the outlet side with a water conducting soil (103) outside the building or is connected to a further line for discharging or removing the filtrate, which line opens to another compartment of the storage or leads out of the building.

68. Building according to one of claims 7 to 67, characterized by a filter layer (260) lying on the roof of the spacial unit or garage.

69. Building according to claim 68, characterized by a drain system (262) arranged on the upper side of the roof within the filter layer.

70. Building according to claim 68, characterized by an embodiment of the roof plate as drainage (262) alone or in cooperation with a filter layer (260).

71. Building according to one of claims 7 to 68, characterized by at least one prefabricated trough-like protuberance (270) mounted at the outer wall of the building.

72. Building according to claim 71, characterized by a connection of the protuberances via ducts (272).

73. Building according to claim 72, characterized by a filter layer (260) mounted in the indentations of the protuberances.

74. Building according to one of claims 69 to 73, characterized by a planting (274) of the filter layer (260) made at the factory.

75. Building according to one of claims 69 to 74, characterized by a preparation of the filter layer (260) at the factory for a planting at the location of installation.

76. Building according to one of claims 70 to 75, characterized by at least one supply line (265) and one outlet line (267) to the roof surface and to each trough-like protuberance, preferably extending in the inside of the building, most preferably within the walls of the building.

77. Building according to claims 76 and 73, characterized in that at least one line to the roof of the building and/or to one trough each and/or the ducts according to claim 73 are filled with a material (259) capillarily conducting water.

78. Use of a building according to one of claims 3 to 77 in connection with other buildings of the same type of construction via at least one common line system (174/176), which preferably connects the buildings in pairs and which is effective for transporting excess water into a building adjacent seen in the flow direction.

## Revendications

1. Utilisation d'une construction préfabriquée en béton armé ou en un succédané, comportant un sol, des parois latérales et des parois frontales ainsi qu'une plaque de recouvrement (10) s'étendant au-dessus du sol, la plaque de recouvrement formant la base d'une surface de parking pour au moins un véhicule et la région de la construction située au-dessous de la plaque de recouvrement étant prévue pour être intégrée dans le terrain, et un réservoir de liquide avec admission et sortie étant réalisé au-dessous de la plaque de recouvrement à l'intérieur de la construction, caractérisée en ce que :
la plaque de recouvrement (10) est utilisée pour être incorporée dans une surface de parking (16),
et en ce que pour remplir le réservoir de liquide (12) on utilise de l'eau de pluie et/ou de l'eau usée et/ou de l'eau souterraine ou de surface, qui coule à travers l'admission (14) vers le réservoir d'eau (12) et qui est ensuite utilisée via la sortie (24) du réservoir d'eau en tant qu'eau industrielle et/ou eau d'égout et/ou eau d'infiltration.

2. Utilisation selon la revendication 1, caractérisée en ce que la plaque de recouvrement (10) est utilisée directement comme surface de parking (16).

3. Construction préfabriquée en béton armé ou en succédané, comportant un sol, des parois latérales et des parois frontales ainsi qu'une plaque de recouvrement (10) s'étendant au-dessus du sol, la plaque de recouvrement formant la base d'une surface de parking pour au moins un véhicule et la région de la construction située au-dessous de la plaque de recouvrement étant prévue pour être intégrée dans le terrain, et un réservoir de liquide avec admission et sortie, branché à un cycle d'eau, étant réalisé au-dessous de la plaque de recouvrement à l'intérieur de la construction, caractérisée en ce que la plaque de recouvrement (10) est incorporée dans une surface de parking (16),
et en ce que le cycle d'eau est un cycle ouvert avec un raccord d'arrivée pour l'eau de pluie et/ou pour l'eau usée et/ou l'eau souterraine ou l'eau de surface, et une sortie de soutirage (24) pour l'eau industrielle et/ou l'eau d'égout et/ou l'eau d'infiltration.

4. Construction selon la revendication 3, caractérisée en ce que la plaque de recouvrement (10) est préparée comme plaque porteuse pour une couche de superficie réservée à la circulation, formant une surface de parking, à réaliser sur place.

5. Construction selon la revendication 4, caractérisée en ce que la face supérieure de la plaque porteuse est réalisée sous forme de drainage horizontal (22), à elle seule ou en coopération avec une couche de revêtement (20).

6. Application d'une construction transportable préfabriquée en béton armé ou en un succédané, comportant un sol, des parois latérales et des parois frontales ainsi qu'une plaque de recouvrement s'étendant au-dessus du sol, la plaque de recouvrement formant une plaque de sol (10) d'une cellule de local (30), en particulier d'une cellule de garage, et la région de la construction située au-dessous de la plaque de recouvrement étant prévue pour être intégrée dans le terrain, et un réservoir de liquide (12) avec admission et sortie étant réalisé au-dessous de la plaque de recouvrement à l'intérieur de la construction, caractérisée en ce que :
le réservoir de liquide (12) est utilisé comme réservoir pour de l'eau industrielle, de l'eau d'égout et/ou de l'eau d'infiltration obtenue par de l'eau de pluie et/ou de l'eau usée et/ou de l'eau souterraine ou de surface.

7. Construction transportable préfabriquée en béton armé ou en un succédané, comportant un sol, des parois latérales et des parois frontales ainsi qu'une plaque de recouvrement s'étendant au-dessus du sol, la plaque de recouvrement formant une plaque de sol (10) d'un local en forme de cellule (30), en particulier d'une cellule de garage, et la région de la construction située au-dessous de la plaque de recouvrement étant prévue pour être intégrée dans le terrain, et un réservoir de liquide (12) branché à un cycle d'eau étant réalisé au-dessous de la plaque de recouvrement à l'intérieur de la construction, caractérisée en ce que le cycle de liquide est un cycle ouvert avec un raccord d'arrivée (14) et une sortie de soutirage (24).

8. Construction selon l'une quelconque des revendications 3 à 5 et 7, dans laquelle le réservoir de liquide est incorporé pendant la préfabrication dans la structure murale de la construction, caractérisée en ce que la structure murale (32) de la construction forme elle-même le corps porteur du réservoir d'eau (12).

9. Construction selon la revendication 8, caractérisée en ce que le corps porteur (32) du réservoir d'eau (12) est en un matériau imperméable de la paroi de la construction.

10. Construction selon la revendication 8, caractérisée en ce que le corps porteur (32) du réservoir d'eau (12) est en un matériau perméable, de préférence en béton, de la paroi de la construction, avec une couche intérieure (34) imperméable.

11. Construction selon l'une quelconque des revendications 1 à 10, caractérisée en ce que le réservoir d'eau occupe toute la surface de base intérieure de la construction.

12. Construction selon l'une quelconque des revendications 1 à 10, caractérisée en ce que le réservoir d'eau occupe au moins 75 %, de préférence au moins 90 %, de plus grande préférence au moins 95 % de toute la surface de base intérieure de la construction et en ce que dans le volume résiduel (36) au sec au-dessus du sol sont agencés des dispositifs de transport et/ou de commande.

13. Construction selon l'une quelconque des revendications 1 à 12, caractérisée en ce que le sol, les parois latérales et les parois frontales forment une coque intégralement préfabriquée ouverte sur le haut, laquelle est réunie avec la plaque de recouvrement également intégralement préfabriquée pour former un corps de bâtiment.

14. Construction selon l'une quelconque des revendications 7 à 12 et 13, caractérisée en ce que la plaque de recouvrement (10) fait partie intégrante d'une cellule de garage ou de local (38) préfabriquée.

15. Construction selon l'une quelconque des revendications 1 à 12, caractérisée en ce que la plaque de recouvrement (10) et les parois latérales (44) sont préfabriquées de manière monolithique et sont reliées à un sol (46) préfabriqué.

16. Construction selon l'une quelconque des revendications 12 à 14, caractérisée en ce que la plaque de recouvrement (10) et le sol (46), respectivement, se raccordent de manière détachable au reste de la construction.

17. Construction selon l'une quelconque des revendications 12 à 14, caractérisée en ce que la plaque de recouvrement (10) et le sol (46), respectivement, sont susceptibles d'être reliés l'une à l'autre sur place.

18. Construction selon l'une quelconque des revendications 7 à 17, caractérisée en ce que la région (48) de la construction située au-dessous du plan de la plaque de recouvrement (10) a une extension horizontale différente, de préférence plus faible que la cellule de garage ou de local.

19. Construction selon l'une quelconque des revendications 7 à 18, caractérisée en ce que dans la région (48) dans laquelle la cellule de garage ou de local chevauche la région plus profonde de la construction, cette région plus profonde est prévue en tant que fondation (50) de la cellule de garage ou de local (30).

20. Construction selon l'une quelconque des revendications 1 à 19, caractérisée en ce qu'au moins des régions partielles de la paroi de la construction située au-dessous des plaques de recouvrement, le cas échéant aussi la plaque de recouvrement ou même les régions de la construction situées au-dessus, sont constituées par un matériau composite de recyclage.

21. Construction selon l'une quelconque des revendications 7 à 20, caractérisée en ce qu'elle présente le format d'un garage en duplex avec la plaque de recouvrement comme plancher intermédiaire.

22. Construction selon l'une quelconque des revendications 1 à 21, caractérisée en ce que le réservoir d'eau est pourvu additionnellement d'une amenée d'eau fraîche (52).

23. Construction selon l'une quelconque des revendications 1 à 22, caractérisée par un dispositif d'aération (64) pour le local de la construction situé au-dessous de la plaque de recouvrement, de préférence en utilisant un tuyau traversant la plaque de recouvrement.

24. Construction selon la revendication 23 en liaison avec l'une quelconque des revendications 7 à 22, caractérisée en ce que le tuyau (64) servant à l'aération est agencé coaxialement à un tuyau (68) prévu pour drainer la face supérieure du toit de la cellule de garage ou de local.

25. Construction selon l'une quelconque des revendications 1 à 24, caractérisée en ce que le réservoir d'eau est divisé en au moins deux compartiments pour différentes utilisations et traitements de l'eau.

26. Construction selon l'une quelconque des revendications 1 à 25, caractérisée par un indicateur de niveau de remplissage du réservoir d'eau et, dans le cas de la revendication 25, par un indicateur de niveau remplissage (74) respectif des différents réservoirs d'eau et enceintes agencés dans les différents compartiments.

27. Construction selon l'une quelconque des revendications 1 à 26, caractérisée par un dispositif de commutation (86) pour commuter le niveau d'eau maximum dans le réservoir d'eau respectif entre un mode de fonctionnement estival et un mode de fonctionnement hivernal, compte tenu des profondeurs de gel (88) à prévoir sur le lieu d'implantation dans le terrain (96) environnant.

28. Construction selon la revendication 27, caractérisée par une commande automatique du dispositif de commutation, pilotée par un capteur de température (98).

29. Construction selon la revendication 28, caractérisée en ce qu'un élément hydromécanique (100) est prévu comme capteur de température du sol.

30. Construction selon l'une quelconque des revendications 1 à 29, caractérisée par un dispositif de trop-plein pour évacuer l'eau excédentaire, et en cas de niveaux différents en modes de fonctionnement estival et hivernal, par au moins un trop-plein respectif.

31. Construction selon la revendication 30, caractérisée en ce qu'un premier trop-plein (108) est agencé au niveau de consigne maximum pour le mode de fonctionnement estival (90) et un second trop-plein (110) est agencé au niveau de consigne maximum pour le mode de fonctionnement hivernal (92), et en ce que le second trop-plein (110) est combiné à un dispositif d'arrêt (114) actif dans le mode de fonctionnement estival.

32. Construction selon la revendication 31, caractérisée en ce que le second trop-plein est pourvu d'une soupape (124) qui est commandée de préférence par le capteur de température (98) selon la revendication 29 et ce qu'un dispositif anti-retour (116) est situé en aval de cette soupape en direction d'écoulement.

33. Construction selon l'une quelconque des revendications 1 à 32, caractérisée par le passage d'un écoulement (128) d'eau excédentaire d'un dispositif de trop-plein à travers le corps de la construction, de préférence à travers son sol.

34. Construction selon la revendication 33, caractérisée par une soupape de non-retour (136) montée sur le trajet de passage et servant de sécurité anti-flottement de la construction.

35. Construction selon l'une quelconque des revendications 1 à 34, caractérisée par le fait qu'elle est fondée sur un produit en vrac perméable de préférence une couche de gravier (132).

36. Construction selon l'une quelconque des revendications 33 à 35, caractérisée en ce que la face inférieure du sol est réalisée avec des canaux de drainage (148) ou au moins un motif constitué par des traverses (150) servant de fondement et au moins avec un évidement (152) agencé entre celles-ci.

37. Construction selon l'une quelconque des revendications 33 à 36, caractérisée par une couche perméable (134) érigée sur la face extérieure des parois latérales et/ou des parois frontales, qui est de préférence reliée à la construction lors de la préfabrication.

38. Construction selon l'une quelconque des revendications 33 à 37, caractérisée par la liaison (154) du passage avec une conduite de drainage circulaire (156) s'étendant autour de la construction.

39. Construction selon l'une quelconque des revendications 33 à 38, caractérisée par des dispositifs d'arrêt (184/186) susceptibles d'être actionnés de préférence depuis le local situé au-dessus de la plaque de recouvrement (10) dans la région d'entrée et de sortie de l'eau excédentaire de la construction respective.

40. Construction selon l'une des revendications 1 à 39, caractérisée en ce que dans le réservoir d'eau est agencée une pompe (104) ou une ouverture d'aspiration (200) d'une conduite d'aspiration de pompage, à l'intérieur d'une enceinte (178) reliée de manière étanche au sol, ou pourvue elle-même d'un sol fermé, dans laquelle est réalisée une entrée d'eau faisant barrage aux matières en flottement provenant du réservoir d'eau.

41. Construction selon la revendication 40, caractérisée en ce que l'entrée d'eau faisant barrage aux matières en flottement est formée par plusieurs canaux (204) qui présentent une pente allant de l'extérieur en bas jusqu'à l'intérieur en haut, et répartis sur la hauteur de l'enceinte (178).

42. Construction selon la revendication 41, caractérisée en ce que les canaux sont réalisés dans la paroi de l'enceinte (202).

43. Construction selon la revendication 41, caractérisée en ce que les canaux sont formés par des coudes tubulaires (206) qui traversent la paroi de l'enceinte, de préférence des coudes tubulaires doubles.

44. Construction selon l'une des revendications 1 à 43, caractérisée en ce que le raccord d'entrée de l'eau de pluie et/ou de l'eau usée débouche dans le réservoir d'eau dans une chambre d'entrée (218) qui s'étend vers le haut depuis la zone du fond du réservoir d'eau, avec une partie de fond fennée et une partie de paroi fermée, et en haut une extrémité de préférence ouverte ou susceptible de l'être, en ce qu'il est prévu à la face supérieure de la partie de fond une zone de séparation (220) pour les matériaux qui se déposent, et en ce qu'à l'intérieur de la chambre d'entrée un tube de sortie d'eau (222) s'étend vers le haut et communique du côté sortie avec la région du fond du réservoir d'eau.

45. Construction que selon la revendication 44, caractérisée en ce que dans la zone de séparation est agencé un collecteur de boues (224) susceptible d'être enlevé.

46. Construction selon l'une ou l'autre des revendications 44 et 45, caractérisée en ce que le fond de la chambre d'entrée est formé par le fond du boîtier.

47. Construction selon l'une quelconque des revendications 44 à 46, caractérisée en ce que le tuyau de sortie d'eau (222) est agencé centré dans la chambre d'admission de préférence cylindrique.

48. Construction selon l'une quelconque des revendications 44 à 47, caractérisée en ce que le tuyau de sortie d'eau (222) est assemblé à partir d'un raccord coudé (230) traversant la partie de paroi et d'un tuyau vertical enfiché amovible dans celui-ci.

49. Construction selon l'une quelconque des revendications 44 à 47, caractérisée en ce que le raccord d'arrivée (226) débouche de manière tangentielle dans la chambre d'admission.

50. Construction selon l'une quelconque des revendications 44 à 49, caractérisée en ce que l'extrémité ouverte vers le haut du tuyau de sortie d'eau (222) est agencée à la hauteur de l'embouchure du raccord d'amenée dans la chambre d'admission.

51. Construction selon l'une quelconque des revendications 49 à 50, caractérisée par des surfaces de guidage (228) agencées sur la face intérieure de la partie de paroi de la chambre d'admission, lesquelles sont agencées et réalisées de telle manière qu'elles dévient l'écoulement tangentiel en un écoulement circulaire orienté vers le bas.

52. Construction selon l'une quelconque des revendications 44 à 51, caractérisée en ce qu'un tuyau à tamis (232) s'étend vers le haut depuis l'ouverture d'admission supérieure du tuyau de sortie d'eau, lequel est de préférence relié par enfichage au tuyau de sortie d'eau.

53. Construction selon l'une quelconque des revendications 44 à 51, caractérisée en ce qu'un filtre annulaire (236) s'étend vers le haut depuis l'ouverture d'admission supérieure du tuyau de sortie d'eau, dont l'espace intérieur communique avec le tuyau de sortie d'eau et dont la surface extérieure communique avec l'espace intérieur de la chambre d'admission.

54. Construction selon la revendication 53, caractérisée en ce que le filtre annulaire est réalisé cylindrique.

55. Construction selon la revendication 53, caractérisée en ce que le filtre annulaire est un filtre plissé (238).

56. Construction selon la revendication 53, caractérisée en ce que le filtre annulaire est réalisé polygonal.

57. Construction selon l'une quelconque des revendications 53 *à* 56, caractérisée en ce que le filtre annulaire présente des parois de tamis extérieure (240) et intérieure (242) et une cartouche filtrante (244) agencée entre celles-ci, laquelle est amovible, de préférence susceptible d'être remplacée ou régénérée.

58. Construction selon la revendication 57, caractérisée en ce que la cartouche filtrante est formée par un produit en vrac à effet filtrant.

59. Construction selon l'une quelconque des revendications 53 à 58, caractérisée en ce que le filtre annulaire est porté par le tuyau de sortie d'eau (222), de préférence relié par enfichage à celui-ci.

60. Construction selon l'une quelconque des revendications 53 à 59, caractérisée en ce que le filtre annulaire présente au moins une paroi intermédiaire à tamis (246) perméable périphérique et en ce que les compartiments radial intérieur (248) et radial extérieur (250), séparés par ladite paroi intermédiaire, sont remplis de différents matériaux filtrants.

61. Construction selon l'une quelconque des revendications 53 à 60, caractérisée en ce que le filtre annulaire est entouré par un tamis additionnel (252) qui est porté par le filtre annulaire, de préférence de manière détachable, pour éviter que des matériaux grossiers ne pénètrent radialement dans le filtre annulaire.

62. Construction selon l'une quelconque des revendications 53 à 61, caractérisée en ce que le filtre annulaire est pourvu d'un dispositif de lavage à contre-courant (254).

63. Construction selon l'une quelconque des revendications 53 à 61, caractérisée en ce que le filtre annulaire est pourvu d'un dispositif d'autonettoyage susceptible d'être actionné temporairement, de préférence périodiquement, et en ce que de préférence de l'eau aérée provenant du réservoir d'eau est versée ou au moins amenée par gouttes sur le filtre annulaire.

64. Construction selon la revendication 63, caractérisée en ce que l'eau utilisée pour l'autonettoyage est amenée depuis une dérivation de la conduite de pompage derrière la pompe, via un dispositif de soupape à commande.

65. Construction selon l'une quelconque des revendications 31 à 64, caractérisée par un troisième trop-plein (112) qui est agencé avec son embouchure dans la chambre d'admission au-dessus du filtre annulaire et qui est agencé plus haut que le premier trop-plein (108), de la valeur approximative de la hauteur de la résistance du filtre annulaire, mesurée en tant que hauteur de colonne d'eau.

66. Construction selon la revendication 65, caractérisée en ce que les sorties du premier (108) et du troisième trop-plein (112) sont connectées l'une à l'autre lorsqu'une fermeture anti-odeurs (122) est agencée en amont de ceux-ci.

67. Construction selon l'une quelconque des revendications 1 à 65, caractérisée en ce qu'en tant que sortie d'eau hors du réservoir d'eau ou au moins hors d'un compartiment du réservoir d'eau dans le cas de différentes utilisations et/ou hors d'une enceinte du réservoir, il est prévu au moins un filtre (203) à produits en vrac ou solides, lequel communique côté sortie, en cas d'infiltration, avec le terrain (103) ou le sol en dehors de la construction ou est relié à une seconde conduite pour dévier ou pour extraire le produit filtré, ladite conduite débouchant dans un autre compartiment du réservoir ou menant hors de la construction.

68. Construction selon l'une quelconque des revendications 7 à 67, caractérisée par une couche filtrante (260) reposant sur le toit de la cellule de local ou du garage.

69. Construction selon la revendication 68, caractérisée par un système de drainage (262) monté sur la face supérieure du toit à l'intérieur de la couche filtrante.

70. Construction selon la revendication 68, caractérisée par une réalisation de la plaque de toit sous forme de drainage (262), seul ou en coopération avec une couche filtrante (260).

71. Construction selon l'une quelconque des revendications 7 à 68, caractérisée par au moins une protubérance (270) préfabriquée en forme de bac, ménagée sur une paroi extérieure de la construction.

72. Construction selon la revendication 71, caractérisée par une liaison des protubérances via des canaux (272).

73. Construction selon la revendication 72, caractérisée par une couche filtrante (260) ménagée dans les creux des protubérances.

74. Construction selon l'une quelconque des revendications 69 à 73, caractérisée par une plantation (274) de la couche filtrante (260) effectuée à la production.

75. Construction selon l'une quelconque des revendications 69 à 74, caractérisée par une préparation lors de la production, de la couche filtrante (260) dans le but d'une plantation par le constructeur.

76. Construction selon l'une quelconque des revendications 70 à 75, caractérisée par au moins une conduite d'amenée (265) et d'évacuation (267) sur la surface du toit et vers chaque protubérance en forme de bac. s'étendant de préférence à l'intérieur de la construction, de plus grande préférence à l'intérieur de la paroi de la construction.

77. Construction selon l'une quelconque des revendications 76 et 73, caractérisée en ce qu'au moins une conduite respective menant au toit de la construction et/ou vers un bac respectif, et/ou les canaux selon la revendication 73 est remplie (sont remplis) d'un matériau (259) à conduction d'eau par capillarité.

78. Application d'une construction selon l'une quelconque des revendications 3 à 77 en liaison avec d'autres constructions du même type par l'intermédiaire d'au moins un système de conduites (174/176) commun, lequel relie de préférence les constructions par paire et lequel sert à transmettre l'eau excédentaire dans une construction voisine en direction d'écoulement.
